# EUROPÄISCHE PATENTSCHRIFT

(11) **EP 2 730 263 B1**
(45) Veröffentlichungstag und Bekanntmachung des Hinweises auf die Patenterteilung: **22.05.2019**
(21) Anmeldenummer: 13192142.1
(22) Anmeldetag: 08.11.2013
(51) Int. Cl.: A61G 7/05, A61G 7/08, A61G 13/10, A61G 7/018, A61G 7/012, A61G 7/015, A61G 13/06, A61G 13/08

(54) **Transportwagen zum Transport einer Patientenlagerfläche und/oder einer Operationstischsäule eines Operationstischs**
Transport trolley for the transport of a patient support surface and/or an operating table column of an operating table
Chariot de transport pour le transport d'un lit de patient et/ou d'une colonne de table d'opération d'une table d'opération

(30) Priorität: 09.11.2012 DE 102012110755
(43) Veröffentlichungstag der Anmeldung: 14.05.2014
(73) Patentinhaber: Maquet GmbH, 76437 Rastatt (DE)
(72) Erfinder: Kobuß, Matthias, 76593 Gernsbach (DE)
(74) Vertreter: Zacco GmbH

(56) Entgegenhaltungen:
- WO-A2-01/60308
- GB-A- 2 462 185
- JP-U- S6 079 423
- US-A- 3 055 042
- US-A1- 2008 120 810

## Beschreibung

Die Erfindung betrifft einen Transportwagen zum Transport einer Patientenlagerfläche und/oder einer Operationstischsäule eines Operationstischs. Es sind Transportwagen bekannt, die ein Fahrgestell haben, das mit der Patientenlagerfläche und/oder mit der Operationstischsäule des Operationstischs verbindbar ist. Das Fahrgestell hat einen ersten Längsholm und ein in einem Abstand zu diesem angeordneten weiten Längsholm. Der erste und der zweite Längsholm bilden eine gabelförmige Öffnung. An dem die gabelförmige Öffnung bildenden Längsholm ist jeweils mindestens eine um eine Schwenkachse schwenkbare Lenkrolle angeordnet. Ferner betrifft die Erfindung eine Anordnung, die eine Patientenlagerfläche und/oder einer Operationstischsäule eines Operationstischs sowie einem Transportwagen umfasst. Operationstische, die eine von einer Operationstischsäule trennbare Patientenlagerfläche und ggf. weitere mit der Operationstischsäule und/oder der Patientenlagerfläche koppelbare Elemente umfassen, werden auch als Operationstischsysteme bezeichnet.

Aus dem Dokument EP 0 410 349 B1 ist ein Transportwagen für Operationstischplatten bekannt, bei dem mindestens zwei Fahrrollen des Transportwagens auf ihren Achsen in Achsrichtung verschiebbar gelagert sind, sodass eine einfache Positionierung des Transportwagens um eine OP-Tischsäule herum möglich ist.

Aus dem Dokument DE 41 40 885 C1 ist ein Transportwagen für Operationstischplatten mit einer Neigungsvorrichtung und einer mechanisch gesteuerten hydraulischen Verrastung bekannt.

Aus dem Dokument DE 43 09 663 C1 ist ein Transportwagen für Operationstischplatten bekannt, der vier Lenk- und zwei Führungsrollen hat.

Aus dem Dokument DE 88 15 279 U1 ist eine Vorrichtung zum Transportieren von Operationstischen bekannt, bei dem mit Hilfe eines Antriebs mindestens eine der Lenkrollen antreibbar ist.

Aus dem Dokument DE 11 58 663 A1 ist ein Transportwagen für einen Operationstisch bekannt, bei dem die Liegefläche einfach vom Transportwagen auf den Operationstisch umsetzbar ist.

Aus dem Dokument EP 0 457 247 B1 ist ein Transportwagen zum Transport eines Operationstischs bekannt, bei dem wahlweise eine Tischplatte des OP-Tischs oder eine in ihrer Länge durch eine Hubeinrichtung veränderliche Stützsäule zusammen mit der Tischplatte transportierbar ist.

Aus dem Dokument DE 10 2007 043 431 A1 ist ein Transportwagen für die Patientenlagerfläche eines Operationstischs bekannt, der eine integrierte Hubeinrichtung zur Änderung der Höhe einer mit dem Transportwagen gekoppelten Patientenlagerfläche hat, wobei die Ausrichtung der Patientenlagerfläche bei einer Höhenänderung gleich bleibt.

Die US 2008/0120810 A1 beschreibt einen Transportwagen gemäß dem Oberbegriff des Anspruchs 1.

Bekannte Transportwagen dienen dazu, eine Patientenlagerfläche mit einem auf dieser Lagefläche lagernden Patienten vor, während und nach einer Operation aufzunehmen. Die Patientenlagerfläche kann als Baueinheit mit einer Operationstischsäule gekoppelt und von dieser wieder gelöst werden, sodass die Patientenlagerfläche von der Operationstischsäule an den Transportwagen und vom Transportwagen wieder auf dieselbe oder eine andere gleichartige Operationstischsäule übergeben werden kann. Mit dem Transportwagen werden z. B. weite Strecken in einem Operationstrakt eines Krankenhauses zurückgelegt. Deshalb ist es wichtig, dass der Transportwagen möglichst wendig ist und die erforderlichen Kräfte zum Verschieben des Transportwagens mit der Patientenlagerfläche möglichst gering sind. Ferner muss die Gesamtbreite des Transportwagens möglichst gering sein, damit dieser auch einfach durch Türen mit in Krankenhäusern üblichen Türbreiten gefahren werden kann.

Insbesondere bei einen breiten Standfuß aufweisenden Operationstischsäulen von mobilen Operationstischen und der Verwendung von Lenkrollen am Transportwagen kann es zu Kollisionen beim Auf- bzw. Abfahren des Transportwagens über die Operationstischsäule, d. h. dann, wenn der Transportwagen so unter die Patientenlagerfläche gefahren wird, dass die Längsholme des Fahrgestells des Transportwagens einen senkrechten Abschnitt der Operationstischsäule aufnehmen bzw. umgreifen, wobei der Transportwagen anschließend wieder von der Operationstischsäule in entgegengesetzter Richtung entfernt wird. Durch den Bewegungsrichtungswechsel des Transportwagens nach der Übernahme der Patientenlagerfläche kommt es zum Umschwenken der an den Längsholmen des Fahrgestells angeordneten Lenkrollen. Solche Lenkrollen sind im Allgemeinen nicht angetriebene Stützräder, die in der Lage sind, sich selbstständig zur aktuellen Bewegungsrichtung des Fahrgestells auszurichten.

Es sind Lenkrollen an Transportwagen zum Transport von Patientenlagerflächen in unterschiedlichen Größen bekannt. Übliche Lenkrollen haben ein oder zwei Laufräder, die um eine vertikale Schwenkachse drehbar mit den Längsholmen verbunden sind. Entscheidend für die Funktion dieser Lenkrollen ist, dass die Drehachse der Laufräder bzw. des Laufrades sich nicht mit der vertikalen Schwenkachse schneidet, sondern dass sie einen gewissen Abstand, der auch Nachlauf genannt wird, zueinander haben, sodass die Rollen nachgeschleppt werden. Die Schwenkachse und die Drehachse sind somit windschief zueinander. Solche Lenkrollen werden auch als Castor-Räder bezeichnet und beispielsweise auch an Bürostühlen, Rollstühlen, Einkaufswagen und Kinderwagen verwendet.

Um Kollisionen zwischen der Operationstischsäule und den Lenkrollen des Transportwagens zu vermeiden, kann der Säulenfuß entsprechend klein ausgebildet werden. Dies geht jedoch zu Lasten der Standsicherheit der Operationstischsäule. Weiterhin ist es möglich, den Transportwagen entsprechend breit auszubilden, damit es nicht zur Kollisionen zwischen den Lenkrollen und dem Fuß der Operationstischsäule kommt. Dies geht jedoch zu Lasten der Wendigkeit und zu Lasten der Anforderungen an die Breite von Türen und Gängen.

Zur guten Manövrierbarkeit eines Transportwagens für Operationstischsäulen und Patientenlagerflächen von Operationstischen ist es vorteilhaft, vier Lenkrollen zu verwenden, sodass auch ein seitliches Verschieben des Transportwagens und einer mit dem Transportwagen verbundenen Patientenlagerfläche und/oder einer mit dem Transportwagen verbundenen Operationstischsäule möglich ist. Zum Reduzieren des Rollwiderstandes sowie der erforderlichen Schubkräfte zum Bewegen des Transportwagens sowie zur besseren Hindernisüberwindung werden Lenkrollen mit möglichst großen Laufraddurchmessern verwendet. Durch die Nutzung von großen Laufraddurchmessern kann es jedoch bei einer Bewegungsumkehr der Bewegung des Transportwagens zu einer Kollision und einem Verklemmen der mit den Längsholmen des Transportwagens verbundenen Lenkrollen mit einer zwischen den Längsholmen angeordneten Operationstischsäule kommen, wenn die Lenkrollen bei der Bewegungsrichtungsumkehr nach innen, d.h. zum Fuß der Operationstischsäule hin, umschwenken. Eine Bewegung des Transportwagens von der Operationstischsäule weg wird dadurch unmöglich oder ist nur mit sehr hohem Kraftaufwand möglich.

Aufgabe der Erfindung ist es, einen Transportwagen sowie eine Anordnung mit einem Transportwagen und einem Operationstisch anzugeben, bei denen eine mögliche Kollision zwischen den Lenkrollen des Transportwagens und einer Operationstischsäule des Operationstischs auf einfache Weise vermieden wird.

Diese Aufgabe wird durch einen Transportwagen zum Transport einer Patientenlagerfläche und/oder einer Operationstischsäule eines Operationstischs mit den Merkmalen des Anspruchs 1 sowie durch eine Anordnung mit den Merkmalen des unabhängigen Anordnungsanspruchs gelöst. Vorteilhafte Weiterbildungen der Erfindung sind in den abhängigen Ansprüchen angegeben.

Der erfindungsgemäße Transportwagen hat mindestens eine Begrenzungseinheit zum Begrenzen der Schwenkbewegung mindestens einer der Lenkrollen um ihre Schwenkachse. Die Begrenzungseinheit begrenzt in einem deaktivierten ersten Betriebszustand die Schwenkbewegung der mindestens einen Lenkrolle nicht. Dadurch ist eine ungehinderte Schwenkbewegung im ersten Betriebszustand möglich. In einem aktivierten zweiten Betriebszustand begrenzt die Begrenzungseinheit die Schwenkbewegung der Lenkrolle. Dies hat insbesondere bei mobilen Operationstischen, bei denen die Operationstischsäule einen für die Standfestigkeit des Operationstischs erforderlichen großflächigen Fuß hat und sich der Schwenkbereich der Lenkrollen im Bereich der Operationstischsäule mit Bereichen der Operationstischsäule, insbesondere mit dem Säulenfuß, überlappen kann, den Vorteil, dass die Begrenzungseinheit eine Schwenkbewegung bei einer Bewegungsrichtungsumkehr zur der Operationstischsäule bzw. zum Fuß der Operationstischsäule hin verhindert. In dem deaktivierten ersten Betriebszustand ist im Unterschied zum aktivierten zweiten Betriebszustand jedoch eine Schwenkbewegung ohne weitere Maßnahmen frei möglich.

Besonders vorteilhaft ist es, wenn trotz aktiviertem zweiten Betriebszustand die Schwenkbewegung wieder freigegeben, d. h. nicht mehr begrenzt wird, wenn die Operationstischsäule soweit angehoben worden ist bzw. eine in ihrer Höhe veränderliche Operationstischsäule soweit zusammen gefahren worden ist, dass sie einen Abstand zum Boden hat, durch den es nicht mehr zu einer Kollision zwischen den Laufrädern und der Operationstischsäule kommen kann, oder zumindest Maßnahmen zum Eingriff von Verbindungselementen des Transportwagens mit der Operationstischsäule getroffen worden sind. Dadurch kann die Patientenlagerfläche zusammen mit der Operationstischsäule oder alternativ die Operationstischsäule ohne Patientenlagerfläche mit Hilfe des Transportwagens auch einfach seitlich in jede beliebige Richtung verschoben werden.

Bei einer vorteilhaften Ausführungsform ist eine erste Begrenzungseinheit zum Begrenzen der Schwenkbewegung der ersten Lenkrolle mit dem ersten Längsholm verbunden und eine zweite Begrenzungseinheit zum Begrenzen der Schwenkbewegung der zweiten Lenkrolle mit dem zweiten Längsholm. Dadurch können Kollisionen beider Lenkrollen auf einfache Weise vermieden werden, sodass eine einfache Handhabung des Transportwagens möglich ist.

Die folgenden Ausführungen gelten sowohl für Ausführungsformen mit nur einer Begrenzungseinheit als auch für Ausführungsformen mit zwei Begrenzungseinheiten, wobei die nachfolgend angegebenen vorteilhaften Weiterbildungen für die zweite Begrenzungseinheit entsprechend gelten.

Vorteilhaft ist es, wenn die Begrenzungseinheit ein Kontaktelement umfasst, das zwischen einer ersten Position im ersten Betriebszustand und einer zweiten Position im zweiten Betriebszustand bewegbar ist. Dabei kann vorgesehen sein, dass eine durch die erste Position und die zweite Position verlaufende Gerade parallel zur Längsachse des Längsholms verläuft oder dass die Gerade windschief zur Längsachse des Längsholms verläuft, wobei die Gerade und die Längsachse in einer Projektion in der Draufsicht auf den Transportwagen einen spitzen Winkel einschließen. Dieser Winkel ist vorzugsweise ein Winkel im Bereich von 0,5° bis 10°, insbesondere ein Winkel im Bereich von 2° bis 8°, beispielsweise ein Winkel von 5°. Dadurch kann eine aufgrund einer Bewegungsrichtung des Transportwagens in Richtung der Längsachse eines Längsholms bewirkten Ausrichtung der Lenkrolle diese schräg nach außen, d. h. von der gabelförmigen Öffnung weg, ausgelenkt werden.

Alternativ oder zusätzlich zu dieser Weiterbildung kann das Kontaktelement in der zweiten Position einen größeren seitlichen Abstand zu einer senkrechten Ebene, durch die die Längsachse des Längsholms verläuft bzw. zu einer senkrechten Mittelebene des Transportwagens, die parallel zur Längsachse des Längsholms ist, haben als in der ersten Position. Dadurch verläuft die Bewegung des Kontaktelements schräg nach außen, wodurch der hintere Teil der Lenkrolle nach außen gedrückt wird. Dadurch kann bei einer Umkehr der Bewegungsrichtung des Transportwagens, d. h. bei einem Rückzug des Transportwagens von der Operationstischsäule weg oder beim Entfernen des Transportwagens von der Operationstischsäule, die von dem Kontaktelement derart kontaktierte Lenkrolle nur nach außen umschwenken, sodass keine Gefahr der Kollision der Lenkrolle mit der Operationstischsäule, insbesondere mit dem Fuß der Operationstischsäule, besteht.

Bei einer Weiterbildung der Erfindung kontaktiert das Kontaktelement zum Begrenzen der Schwenkbewegung der Lenkrolle im zweiten Betriebszustand ein Laufrad der Lenkrolle seitlich und/oder eine seitliche Abdeckung des Laufrades der Lenkrolle. Dadurch kann erreicht werden, dass keine oder nur eine geringe Reibung zwischen dem Kontaktelement und der Lenkrolle bei einer Bewegung des Transportrades auftritt, wenn sich die Begrenzungseinheit in einer Begrenzungsposition im zweiten Betriebszustand befindet. Ferner kann durch den seitlichen Kontakt ein Auslenken der Lenkrolle nach außen, d. h. von der gabelförmigen Öffnung weg, erreicht werden, wenn auf die Innenseite des Laufrades und/oder eine innere seitliche Abdeckung des Laufrades der Lenkrolle beim Kontaktieren eine Kraft ausgeübt wird. Die innere Seite des Laufrades bzw. die innere Abdeckung ist dabei die der gabelförmigen Öffnung zugewandte Seite des Laufrades bzw. die der gabelförmigen Öffnung zugewandte Abdeckung.

Besonders vorteilhaft ist es, wenn sich die Lenkrollen durch ihre Möglichkeit, sich um die Schwenkachse zu drehen, selbstständig zur aktuellen der Bewegungsrichtung des Transportwagens ausrichten. Die Laufraddrehachse und die Schwenkachse sind dabei windschief zueinander. Der horizontale Abstand zwischen der Laufraddrehachse und der Schwenkachse wird dabei als Nachlauf bezeichnet. Vorzugsweise sind die Lenkrollen nicht angetrieben. Insbesondere sind alle Rollen des Transportwagens nicht angetrieben. Der Transportwagen wird vorzugsweise durch eine Person geschoben. Die Lenkrollen werden auch als Castor-Rad bezeichnet. Solche Lenkrollen sind preiswert in unterschiedlichen Ausführungsformen erhältlich, sodass auf Standardlenkrollen für den erfindungsgemäßen Transportwagen zurückgegriffen werden kann. Dadurch kann kostengünstige, bewährte Technik genutzt werden.

Ferner ist es vorteilhaft, wenn das Kontaktelement nach einer durch eine Bewegung des Transportwagens in Richtung eines freien Endes des Längsholms entlang dessen Längsachse bewirkten Ausrichtung des Laufrades der Lenkrolle dieses bei einer Bewegung von der ersten in die zweite Position auslenkt. Dies erfolgt vorzugsweise so, dass die Abrollrichtung des Laufrades die zwischen zu den Längsachsen der Längsholme verlaufende senkrechte Mittelebene des Transportwagens in einem Winkel schneidet, der im Bereich von 0,5° bis 10°, insbesondere in einem Bereich von 1° bis 7° liegt, beispielsweise in einen Winkel von 5°, schneidet. Die senkrechte Mittelebene des Transportwagens ist dabei vorzugsweise parallel zu einer senkrechten Ebene, in der die Längsachse verläuft, wobei die Drehachse des Laufrades der Lenkrolle orthogonal zu diesen beiden senkrechten Ebenen in der beschriebenen Ausrichtung ist. Dadurch wird ein einfacher Aufbau des Transportwagens erreicht.

Ferner ist es vorteilhaft, wenn die Begrenzungseinheit derart ausgebildet und/oder angeordnet ist, dass durch einen Kontakt der Begrenzungseinheit mit einer zwischen den Längsholmen angeordneten Operationstischsäule eine Änderung des Betriebszustands der Begrenzungseinheit vom ersten Betriebszustand in den zweiten Betriebszustand erfolgt. Dadurch kann die Änderung des Betriebszustands auf einfache Weise erfolgen, ohne dass hierzu Bedieneingriffe einer Bedienperson erforderlich sind.

Dabei ist es besonders vorteilhaft, wenn bei einem Kontakt zwischen der Operationstischsäule und dem Transportwagen ein Eingriffselement der Begrenzungseinheit die Position eines mit dem Kontaktelement verbundenen Führungselements entlang einer Geraden verschiebt. Diese Gerade verläuft vorzugsweise parallel oder in einer horizontalen Ebene schräg zur zwischen den Längsholmen verlaufenden senkrechten Mittelebene des Transportwagens. Bei einem schrägen Verlauf zur Mittelebene schneidet die Gerade die Mittelebene in einem Winkel im Bereich von 0,5 ° bis 10 °, insbesondere in einem Winkel im Bereich von 1° bis 7°, beispielsweise in einem Winkel von 5°.

Bei einer weiteren vorteilhaften Weiterbildung ist das Kontaktelement derart drehbar gelagert, dass es bei einem Kontakt mit dem Laufrad der Lenkrolle und bei einer Drehbewegung des Laufrads eine Drehbewegung ausführt. Dadurch wird die Bremskraft beim Kontakt des Kontaktelements mit dem Laufrad erheblich reduziert, da nur geringe Rollreibung zwischen dem Laufrad und dem Kontaktelement und keine oder nur eine geringe Gleitreibung bei einer Drehbewegung des Laufrades auftritt. Dadurch lässt sich der Transportwagen einfacher bewegen und das Kontaktelement sowie das Laufrad haben geringeren Verschleiß.

Ferner ist es vorteilhaft, wenn das Fahrgestell Verbindungselemente zum wahlweisen Herstellen einer Verbindung mit der Patientenlagerfläche und der Operationstischsäule hat. Die Verbindungselemente sind in einem Abstand über den Längsholmen des Fahrgestells angeordnet. Vorzugsweise hat das Fahrgestell eine erste Schnittstelle zum Verbinden des Transportwagens mit der Operationstischsäule und eine zweite Schnittstelle zum Verbinden des Transportwagens mit der Patientenlagerfläche. Dabei können die erste Schnittstelle und die zweite Schnittstelle alternativ oder bei alternativen Ausführungsformen auch gleichzeitig genutzt werden. Bei der Verbindung des Transportwagens mit einer Operationstischsäule, auf der eine Patientenlagerfläche angeordnet ist, kann durch eine Verbindung zwischen dem Fahrgestell des Transportwagens und der Operationstischsäule der aus Operationstischsäule und Patientenlagerfläche zusammengesetzte Operationstisch insgesamt transportiert werden. Übliche Operationstische haben einen Operationstischkopf, der entweder der Patientenlagerfläche zuzuordnen oder der Operationstischsäule zuzuordnen ist, sodass der Operationstischkopf je nach Ausführung des Operationstischs Bestandteil der Patientenlagerfläche ist und bei einer Trennung der Patientenlagerfläche von der Operationstischsäule mit der Patientenlagerfläche von der Säule getrennt wird oder bei anderen Ausführungsformen, bei denen der Operationstischkopf Bestandteil der Operationstischsäule ist, bei einer Trennung der Patientenlagerfläche von der Operationstischsäule an dieser verbleibt. Dadurch ist eine einfache Handhabung der Patientenlagerfläche und der Operationstischsäule in Verbindung mit dem Transportwagen möglich.

Besonders vorteilhaft ist es, wenn das Fahrgestell eine Hubvorrichtung, vorzugsweise eine hydraulische mechanische und/oder elektrische Hub- und Absenkeinheit, zum Verändern des Abstandes der Verbindungselemente zu den Längsholmen und/oder eine Neigungsvorrichtung, vorzugsweise eine hydraulische mechanische und/oder elektrische Neigungseinstellvorrichtung, zum Einstellen der Neigung der Verbindungselemente hat, sodass insbesondere die Neigung der Patientenlagerfläche verändert werden kann. Dadurch kann auch eine Neigung der Patientenlagerfläche herbeigeführt werden, um einen auf der Patientenlagerfläche lagernden Patienten in eine Schocklage zu bringen.

Ferner ist es vorteilhaft, wenn der Transportwagen zwei weitere Lenkrollen hat, die mit dem Fahrgestell, vorzugsweise mit dem Längsholm verbunden sind und/oder wenn mindestens eine absenkbare nicht schwenkbare Führungsrolle mit dem Fahrgestell verbunden sind. Dadurch ist eine einfache Handhabung des Transportwagens möglich. Das Vorsehen von vier schwenkbaren Lenkrollen ermöglicht eine Bewegung des Transportwagens in eine beliebige Richtung, sodass ein einfaches Manövrieren des Transportwagens möglich ist. Die mindestens eine absenkbaren Führungsrolle ermöglicht im abgesenkten Zustand einen einfachen Geradeauslauf, sodass der Transportwagen auch über längere gerade Distanzen einfach verfahrbar ist. Im nicht abgesenkten Zustand berührt die Führungsrolle den Fußboden nicht, sodass sie die Bewegung des Transportwagens nicht beeinflusst. Besonders vorteilhaft ist es, wenn die absenkbaren nicht schwenkbaren Führungsrolle jeweils entlang der Längsachse eines Holms zwischen zwei im Abstand zu der Führungsrolle angeordneten Lenkrollen angeordnet ist. Dadurch ist eine besonders einfache Handhabung, insbesondere eine besonders einfache Lenkung, des Transportwagens möglich.

Besonders vorteilhaft ist es, wenn mindestens zwei mit dem Fahrgestell verbundene Lenkrollen oder zwei mit dem Fahrgestell verbundene nicht schwenkbare Führungsrollen mit einer Bremseinheit gekoppelt sind, durch die eine Bremskraft auf die Laufräder dieser Lenkrollen ausübbar ist. Dadurch ist ein einfaches Feststellen des Transportwagens möglich, sodass eine sichere Handhabung des Transportwagens erreicht wird und gefährliche Situationen einfach vermieden werden können.

Ferner ist es vorteilhaft, wenn die Begrenzungseinheit ein erstes elastisch verformbares Element hat, das in dem zweiten Betriebszustand eine Kraft auf das Kontaktelement oder auf ein mit dem Kontaktelement verbundenes Führungselement ausübt. Durch diese Kraft ist das Kontaktelement insbesondere aus seiner im zweiten Betriebszustand vorgesehenen Position in seine im ersten Betriebszustand vorgesehene Position bewegbar. Insbesondere wird das Führungselement in seine im ersten Betriebszustand vorgesehene Position mithilfe dieser Kraft zurückbewegt.

Alternativ oder zusätzlich zum ersten elastisch verformbaren Element kann die Begrenzungseinheit ein zweites elastisch verformbares Element haben, das in dem aktivierten zweiten Betriebszustand bei einer Verformung eine Kraft auf das Kontaktelement ausübt, wobei das Kontaktelement im aktivierten zweiten Betriebszustand entgegen der durch die Verformung bewirkten Kraft aus einer Begrenzungsposition, in der die Schwenkbewegung der Lenkrolle begrenzt ist, in eine Freigabeposition, in der die Schwenkbewegung der Lenkrolle nicht begrenzt ist, mithilfe eines Betätigungselements bewegbar ist. Dadurch kann die Begrenzung der Schwenkbewegung der Lenkrolle auch dann aufgehoben werden, wenn sich die Begrenzungseinheit im zweiten Betriebszustand befindet, d.h. insbesondere auch dann, wenn sich im Bereich der gabelförmigen Öffnung eine Operationstischsäule befindet, sodass der zweite Betriebszustand vorzugsweise automatisch beim Einführen der Operationstischsäule in die gabelförmige Öffnung des Transportwagens eingestellt ist, eine Freigabe der Schwenkbewegung der Lenkrolle erfolgt. Die Verformung des elastisch verformbaren Elements erfolgt vorzugsweise auch dann, wenn durch eine entsprechende Schrägstellung des Laufrades der Lenkrolle das Kontaktelement die Lauffläche des Laufrades kontaktiert und nicht einer Position seitlich neben dem Laufrad einnehmen kann. Das erste und/oder das zweite elastisch verformbare Element ist vorzugsweise ein Elastomerblock oder eine Feder, insbesondere eine Schraubenfeder.

Besonders vorteilhaft ist es, wenn das Betätigungselement mit einem Verbindungselement zum Verbinden des Transportwagens mit einer Operationstischsäule derart gekoppelt ist, dass es das Kontaktelement bei einer Verbindung der Operationstischsäule mit dem Transportwagen trotz aktivierten zweiten Betriebszustand aus der Begrenzungsposition in die Freigabeposition bewegt. Dies kann z.B. durch einen mit dem Verbindungselement gekoppelten Bowdenzug erfolgen. Insbesondere wird bei der Verbindung des Transportwagens mit der Operationstischsäule über das Verbindungselement die Seele des Bowdenzugs aus der Bowdenzugshülle herausgezogen, wobei das gegenüberliegende Ende der Seele direkt oder indirekt mit dem Kontaktelement gekoppelt ist und dieses in Richtung des elastisch verformbaren Elements zieht, sodass dieses elastisch verformt wird. Beim Vorsehen von mehreren Begrenzungseinheiten ist für jede Begrenzungseinheit ein Bowdenzug vorgesehen, die jeweils mit einem oder die mit einem Verbindungselement zum Verbinden des Transportwagens mit der Operationstischsäule in Eingriff stehen, sodass die Seelen der Bowdenzüge in einer Kopplungsposition der Verbindungselemente gegenüber der nicht gekoppelten Position verbindungselementsseitig ein Stück aus der Bowdenzughülle herausgezogen sind.

Ferner ist dabei vorteilhaft, wenn ein mit dem Kontaktelement verbundenes Führungselement einen ersten Abschnitt und einen zweiten Abschnitt hat, die entlang ihrer gemeinsamen Längsachse gegeneinander bewegbar sind, wobei bei einer Bewegung des ersten Abschnitts in Richtung des zweiten Abschnitts und/oder bei einer Bewegung des ersten Abschnitts in den zweiten Abschnitt hinein eine elastische Verformung des zweiten elastisch verformbaren Elements erfolgt. Dadurch kann ein einfacher mechanischer Aufbau erreicht werden, durch den trotz dem aktivierten zweiten Betriebszustand eine Änderung der Position des Kontaktelements von der Begrenzungsposition in die Freigabeposition möglich ist.

Ferner ist es dabei vorteilhaft, wenn der erste und zweite Abschnitt einen Zylinder bilden, wobei der erste Abschnitt eine Zylinderöffnung hat, in der das zweite elastisch verformbare Element angeordnet ist und in die ein Teil des zweiten Abschnitts einführbar ist. Dabei erfolgt eine Verformung des zweiten elastisch verformbaren Elements. Der zweite Abschnitt wird durch die durch die Verformung bewirkte Kraft beim Einführen des zweiten Abschnitts zumindest dann aus dem ersten Abschnitt herausgedrückt, wenn keine Gegenkraft auf den zweiten Abschnitt wirkt. Dadurch ist ein einfacher, robuster und kompakter Aufbau einer Anordnung zur Änderung der Position des Kontaktelements von einer Begrenzungsposition in eine Freigabeposition offenbart.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine perspektivische Vorderansicht eines Transportwagens zum Transport einer Operationstischsäule und/oder einer Patientenlagerfläche eines Operationstischs gemäß einer ersten Ausführungsform;
- Figur 2: den Transportwagen nach Figur 1 und einen Operationstisch vor der Übernahme der Patientenlagerfläche des Operationstischs durch den Transportwagen in einer Seitenansicht;
- Figur 3: den Transportwagen und den Operationstisch nach Figur 2 in einer Übernahmeposition;
- Figur 4: den Transportwagen, die Operationstischsäule und die Patientenlagerfläche nach der Übernahme der Patientenlagerfläche durch den Transportwagen;
- Figur 5: eine Ansicht des Transportwagens und der Operationstischsäule von unten;
- Figur 6a: eine perspektivische Darstellung eines Ausschnitts des Transportwagens mit einer Lenkrolle und mit einer Begrenzungseinheit zur Begrenzung der Schwenkbewegung der Lenkrolle, wobei die Begrenzungseinheit in einem ersten nicht aktivierten Betriebszustand gezeigt ist;
- Figur 6b: den Ausschnitt des Transportwagens nach Figur 5a, wobei die Begrenzungseinheit in einem zweiten aktivierten Betriebszustand gezeigt ist;
- Figur 7a: eine schematische Darstellung einer Operationstischsäulenfußes und des Schwenk- sowie des möglichen Kollisionsbereichs beim Entfernen des Transportwagens von der Operationstischsäule in einer ersten Position des Transportwagens relativ zur Operationstischsäule;
- Figur 7b: eine schematische Darstellung eines Fußes einer Operationstischsäule und des Schwenk- sowie des möglichen Kollisionsbereichs beim Entfernen des Transportwagens von der Operationstischsäule in einer zweiten Position des Transportwagens relativ zur Operationstischsäule;
- Figur 7c: eine schematische Darstellung eines Fußes einer Operationstischsäule und des Schwenk- sowie des möglichen Kollisionsbereichs beim Entfernen des Transportwagens von der Operationstischsäule in einer dritten Position des Transportwagens relativ zur Operationstischsäule;
- Figur 8: einen Ausschnitt von zwei Längsholmen des Transportwagens mit den in einem ersten Betriebszustand dargestellten Begrenzungseinheiten, wobei zur besseren Darstellung der Begrenzungseinheiten Elemente des Transportwagens ausgeblendet bzw. aufgebrochen sind;
- Figur 9: den Ausschnitt des Transportwagens nach Figur 7 und ein Ausschnitt einer in einer gabelförmigen Öffnung zwischen den Längsholmen angeordnete Operationstischsäule, wobei die Begrenzungseinheiten im zweiten Betriebszustand in einer Begrenzungsposition dargestellt sind;
- Figur 10: den Ausschnitt des Transportwagens und der Operationstischsäule nach Figur 9, wobei Verbindungselemente zum Anheben der Operationstischsäule in eine Position zum Anheben der Operationstischsäule gebracht worden sind, sodass sich die Begrenzungseinheiten im zweiten Betriebszustand in einer Freigabeposition befinden;
- Figur 11a: eine Schnittdarstellung einer Begrenzungseinheit im ersten Betriebszustand;
- Figur 11b: einen Ausschnitt des Transportwagens mit Verbindungselementen zum Verbinden des Transportwagens mit der Operationstischsäule in einer Position, in der sie nicht im Eingriff mit der Operationstischsäule stehen;
- Figur 12a: eine Schnittdarstellung der Begrenzungseinheit nach Figur 11a im zweiten Betriebszustand;
- Figur 12b: einen Ausschnitt des Transportwagens mit Verbindungselementen zum Verbinden des Transportwagens mit der Operationstischsäule in einer Position, in der sie nicht im Eingriff mit der Operationstischsäule stehen;
- Figur 13a: eine Schnittdarstellung der Begrenzungseinheit nach den Figuren 11a und 12a im zweiten Betriebszustand, wobei die Begrenzungseinheit zusätzlich in eine Freigabeposition bewegt worden ist;
- Figur 13b: Verbindungselemente zum Verbinden des Transportwagens mit einer Operationstischsäule in einer Eingriffsposition, in der sie in Eingriff mit der Operationstischsäule bringbar sind, wobei durch das Ineingriffbringen der Verbindungselemente mit der Operationstischsäule die Begrenzungseinheit von einer Begrenzungsposition in eine Freigabeposition bewegt worden ist;
- Figur 14: eine perspektivische Vorderansicht eines Transportwagens zum Transport einer Operationstischsäule und/oder einer Patientenlagerfläche eines Operationstischs gemäß einer zweiten Ausführungsform;
- Figur 15: den Transportwagen nach Figur 14 und einen Operationstisch vor der Übernahme der Patientenlagerfläche des Operationstischs durch den Transportwagen in einer Seitenansicht;
- Figur 16: den Transportwagen und den Operationstisch nach Figur 15 in einer Übernahmeposition;
- Figur 17: den Transportwagen, die Operationstischsäule und die Patientenlagerfläche der Figuren 15 und 16 nach der Übernahme der Patientenlagerfläche durch den Transportwagen;
- Figur 18: eine Ansicht des Transportwagens und der Operationstischsäule von unten;
- Figur 19a: eine perspektivische Darstellung eines Ausschnitts des Transportwagens mit einer Lenkrolle und mit einer Begrenzungseinheit zur Begrenzung der Schwenkbewegung der Lenkrolle, wobei die Begrenzungseinheit in einem ersten nicht aktivierten Betriebszustand gezeigt ist;
- Figur 19b: den Ausschnitt des Transportwagens nach Figur 19a, wobei die Begrenzungseinheit in einem zweiten aktivierten Betriebszustand gezeigt ist;
- Figur 20: einen Ausschnitt von zwei Längsholmen des Transportwagens mit in einem ersten Betriebszustand dargestellten Begrenzungseinheiten;
- Figur 21: den Ausschnitt des Transportwagens nach Figur 20, und ein Ausschnitt einer in einer gabelförmigen Öffnung zwischen den Längsholmen angeordnete Operationstischsäule, wobei die Begrenzungseinheiten im zweiten Betriebszustand in einer Begrenzungsposition dargestellt sind;
- Figur 22: den Ausschnitt des Transportwagens und der Operationstischsäule nach Figur 21, wobei die Begrenzungseinheiten im zweiten Betriebszustand dargestellt sind und sich die Begrenzungseinheit durch das Anheben des Operationstischsäulenfuß in einer Freigabeposition befinden;
- Figur 23a: eine Vorderansicht der Begrenzungseinheit im ersten Betriebszustand;
- Figur 23b: eine Draufsicht auf die Lenkrolle, die Begrenzungseinheit sowie Eingriffselemente zum Betätigen der Begrenzungseinheit in einer Position, in der die Eingriffselemente nicht im Eingriff mit einer Operationstischsäule stehen;
- Figur 24a: eine Vorderansicht der Begrenzungseinheit nach Figur 23a und einer Operationstischsäule im zweiten Betriebszustand in einer Begrenzungsposition;
- Figur 24b: eine Draufsicht auf die Lenkrolle, die Begrenzungseinheit sowie Eingriffselemente zum Betätigen der Begrenzungseinheit in einer Position, in der ein erstes Eingriffselement im Eingriff mit einer Operationstischsäule steht und ein zweites Eingriffselement nicht in Eingriff mit der Operationstischsäule steht;
- Figur 25a: eine Vorderansicht des Begrenzungseinheit nach den Figuren 23a und 24a im zweiten Betriebszustand in einer Freigabeposition; und
- Figur 25b: eine Draufsicht auf die Lenkrolle, die Begrenzungseinheit sowie Eingriffselemente zum Betätigen der Begrenzungseinheit in einer Position, in der ein erstes Eingriffselement nicht im Eingriff mit einer Operationstischsäule steht und ein zweites Eingriffselement in Eingriff mit der Operationstischsäule steht.

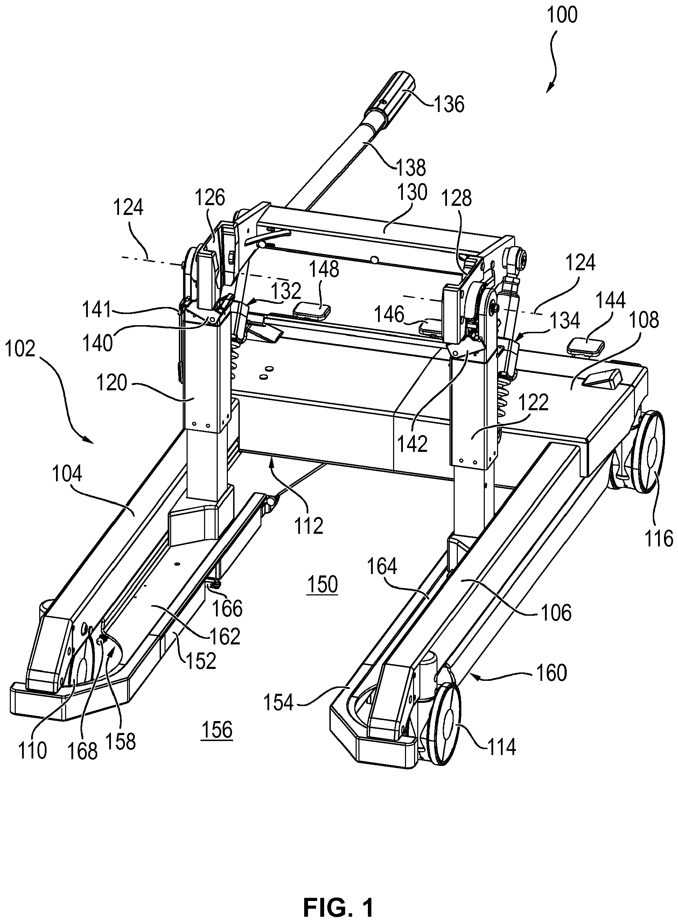

Figur 1 zeigt eine perspektivische Vorderansicht eines Transportwagens 100 zum Transport einer Operationstischsäule und/oder einer Patientenlagerfläche eines Operationstisches gemäß einer ersten Ausführungsform. Der Transportwagen 100 hat einen allgemein mit 102 bezeichnetes Fahrgestell, das zwei Längsholme 104, 106 sowie einen die hinteren Enden der Längsholme 104, 106 verbindenden Querholm 108 hat. An den Enden der Längsholme 104, 106 ist jeweils eine Lenkrolle 110 bis 116 angeordnet, die jeweils um eine senkrechte Schwenkachse drehbar mit den Längsholmen 104, 106 verbunden sind. Die Drehachsenlaufräder der Lenkrollen 110 bis 116 liegen in einer waagerechten Ebene und haben einen Abstand zu der jeweiligen senkrechten Schwenkachse, sodass sie sich bei einer Bewegung des Transportwagens 100 entsprechend dessen Bewegungsrichtung ausrichten.

Das Fahrgestell 102 hat eine erste in ihrer Höhe veränderliche senkrechte erste Stütze 120, deren unteres Ende fest mit dem Längsholm 104 verbunden ist. Ferner hat das Fahrgestell 102 eine zweite höhenveränderbare senkrechte Stütze 122, deren unteres Ende fest mit dem zweiten Längsholm 106 verbunden ist. An den oberen Enden der senkrechten Stützen 120, 122 sind um eine Schwenkachse 124 schwenkbare Verbindungselemente 126, 128 zum Verbinden des Transportwagens 100 mit der Patientenlagerfläche eines Operationstisches verbunden. Die Verbindungselemente 126, 128 sind über ein Kopplungselement 130 starr miteinander verbunden, sodass sie zur Neigung der Patientenlagerfläche nur zusammen um die Schwenkachse 124 gedreht werden können. Die Neigung wird mit Hilfe von mechanischen Getrieben 132, 134 eingestellt, die über einen Drehgriff 136, der am Ende einer Schubstange 138 des Transportwagens 100 angeordnet ist, betätigt werden. Im Inneren der senkrechten Stützen 120, 122 sind weitere nicht dargestellte Hydraulikeinheiten angeordnet, mit denen die Länge der senkrechten Stützen 120, 122 und somit die Höhe der Verbindungselemente 126, 128 zum Verbinden des Transportwagens 100 mit der Patientenlagerfläche eines Operationstisches sowie der Verbindungselemente 140, 142 zur Kopplung des Transportwagens 100 mit der Operationstischsäule eines Operationstisches in ihrer Höhe über den Fußboden, auf dem sich der Transportwagen 100 befindet, eingestellt werden kann. Zur Betätigung einer Hydraulikpumpe für die in den senkrechten Stützen 120, 122 angeordneten Hydraulikeinheiten ist ein Fußbetätigungshebel 144 mit der Hydraulikpumpe gekoppelt. Ein weiterer Fußbetätigungshebel 146 dient zur Betätigung von in den Lenkrollen 110, 116 integrierten Bremsen, sodass diese Lenkrollen 110 bis 116 beim Betätigen des Fußhebels 146 festgestellt bzw. blockiert werden. Ein weiterer Fußhebel 148 dient zum Absenken und zum Anheben einer an den Längsholmen 104, 106 angeordneten Führungsrolle bzw. eines Spurrads, die bzw. das das sich zwischen der vorderen Lenkrolle 110 und der hinteren Lenkrolle 112 befindet.

Die Längsholme 104, 106 sind in einer horizontalen Ebene in einen Abstand nebeneinander angeordnet und bilden eine gabelförmige Öffnung 150, in der zur Übernahme und/oder Übergabe einer Patientenlagerfläche sowie zum Transport einer Operationstischsäule mit oder ohne Patientenlagerfläche eine Operationstischsäule angeordnet werden kann. Dazu wird der Transportwagen 100 so unter den Operationstisch gefahren, dass die Operationstischsäule zwischen mit den Längsholmen 104, 106 verbundenen Führungselementen 152, 154 angeordnet ist. Zur einfachen Positionierung des Transportwagens 100 zur feststehenden mobilen Operationstischsäule ist die erwähnten Führungsrolle vorzugsweise vom Boden abgehoben, sodass der Transportwagen 100 einfach in eine beliebige Richtung mithilfe der vier Lenkrollen 110 bis 116 bewegbar ist. Das Einführen der Operationstischsäule in die gabelförmige Öffnung 150 des Transportwagens 100 wird durch die durch die Führungselemente 152, 154 gebildete trichterförmige Öffnung 156 erleichtert.

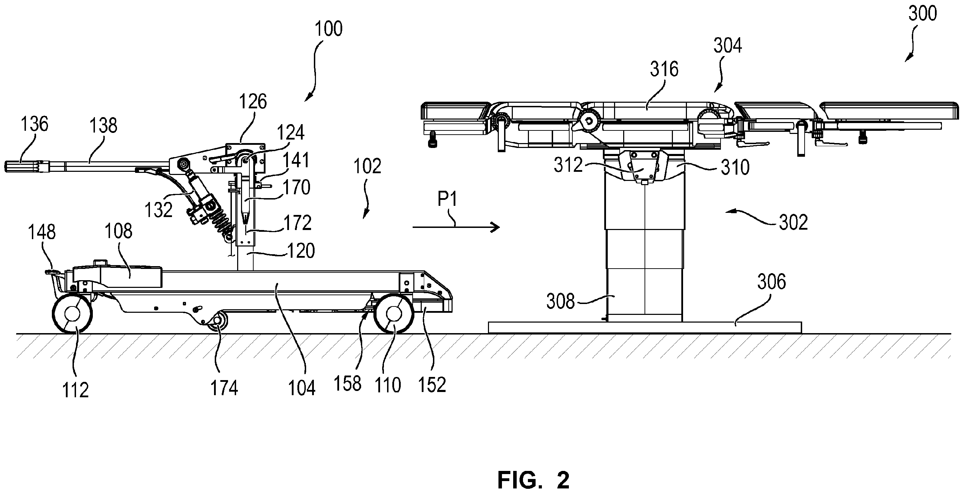

Mobile Operationstischsäulen, d.h. Operationstischsäulen, die nicht fest in einer Aufnahme im Fußboden des Operationssaals verankert sind, haben zur Gewährleistung der Standfestigkeit einen großflächigen Fuß, der unter die Führungselemente 152, 154 ragt und zumindest teilweise in den möglichen Schwenkbereich der Lenkrollen 110, 114 ragt, sodass die Lenkrollen 110, 114 bei einer Bewegungsrichtungsumkehr nach einer Übernahme der Patientenlagerplatte mit dem Operationsfuß kollidieren können, wenn sie nach innen, d.h. zur gabelförmigen Öffnung 150 hin, umschwenken. Durch eine solche Kollision wird das Entfernen des Transportwagens 100 von der Operationstischsäule erschwert oder gar unmöglich gemacht. Wenn sich zu diesem Zeitpunkt ein Patient auf der Patientenlagerfläche befindet, kann dies zu größeren Problemen führen, da unter der Gewichtslast des Patienten und der Patientenlagerfläche die Lenkrollen 110, 114 manuell nach außen gedreht werden müssten. Um dieses Nachinnenschwenken der Lenkrollen zu verhindern, ist erfindungsgemäß für jede der vorderen Lenkrollen 110, 114 eine Begrenzungseinheit 158, 160 vorgesehen, die unterhalb von die Führungselement 152, 154 mit dem jeweiligen Längsholm 104, 106 verbindenden Abdeckblechen 162, 164 angeordnet sind. Von der Begrenzungseinheit 158 ist in Figur 1 ein erstes Eingriffselement 166 sowie ein Kontaktelement 168 sichtbar. Der Aufbau und die Funktion dieser Begrenzungseinheiten 158, 160 wird nachfolgend im Zusammenhang mit den weiteren Figuren 2 bis 16b noch ausführlich erläutert.

In Figur 2 ist der Transportwagen 100 nach Figur 1 und ein Operationstisch 300 vor der Übernahme der Patientenlagerfläche 304 des Operationstisches 300 durch den Transportwagen 100 in einer Seitenansicht gezeigt. In Figur 2 ist ein am ersten Längsholm 104 angeordnetes absenkbares Führungsrad 174 sichtbar, das in einem nicht abgesenkten Zustand dargestellt ist. Der Operationstisch 300 umfasst die Patientenlagerfläche und eine mit 302 bezeichnete Operationstischsäule. Im vorliegenden Ausführungsbeispiel umfasst die Operationstischsäule 302 einen Operationstischfuß 306, eine Teleskopstütze 308 und einen zur Einstellung einer Neigung und Kantung der gesamten Patientenlagerfläche 304 vorgesehenes Kopfmodul 310. Ein zentraler Mittelteil der Patientenlagerfläche 304 ist mit 316 bezeichnet.

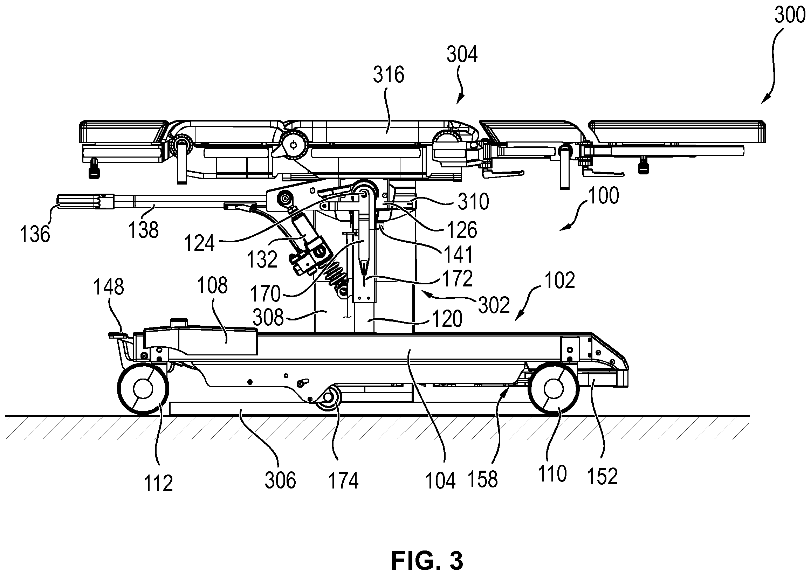

Wie bereits erwähnt, kann mit Hilfe des Transportwagens 100 wahlweise die Patientenlagerfläche 304 von der Operationstischsäule 302 getrennt und vom Transportwagen 100 übernommen werden oder alternativ die Operationstischsäule 302 mit Patientenlagerfläche 304 mit dem Transportwagen 100 transportiert werden. Zur Übernahme der Patientenlagerfläche 304 wird der Transportwagen 100 in Richtung des Pfeiles P1 bewegt, sodass die Operationstischsäule 302 in die gabelförmige Öffnung 150 des Transportwagens 100 eingeführt wird, wobei die Längsholme 104, 106 die Teleskopstütze 308 des Operationstisches 300 seitlich umgreifen. Dieser Zustand ist in Figur 3 dargestellt. Ferner ist in Figur 3 die Patientenlagerfläche 304 durch das Verkürzen der Teleskopstütze 308 nach unten bewegt worden, sodass die an der Patientenlagerfläche 304 vorhandenen Verbindungselemente 312 mit den Verbindungselementen 126, 128 des Transportwagens 100 sicher verbunden sind. Alternativ besteht die Möglichkeit, die höhenveränderbaren Stützen 120, 122 so zu verlängern, dass die Verbindungselemente 126, 128 des Transportwagens 100 mit den Verbindungselementen 312 der Patientenlagerfläche 304 eingreifen.

Zur einfachen und korrekten Verbindung bei der Übernahme der Patientenlagerfläche 304 durch den Transportwagen 100 sowie bei der Übergabe der Patientenlagerfläche 304 vom Transportwagen 100 zur Operationstischsäule 302 müssen die Verbindungselemente 126, 128, 312 korrekt zueinander ausgerichtet sein. Im vorliegenden Ausführungsbeispiel ist dies dann der Fall, wenn das zentrale Mittelteil 316 der Patientenlagerfläche 304 waagerecht ausgerichtet ist und ein drehfest mit dem Verbindungselement 126 verbundener Zeiger 170 auf einer an der senkrechten Stütze 120 angebrachten Markierung 172 steht. Bei anderen Ausführungsformen kann die Patientenlagerfläche 304 zur Übernahme und/oder Übergabe auch eine andere Neigung haben.

Nachdem die Teleskopstütze 308 der Operationstischsäule 302 soweit abgesenkt worden ist, dass die Patientenlagerfläche 304 mit dem Transportwagen 100 verbunden ist, wird sie weiter so weit abgesenkt, bis das Kopfmodul 310 nicht mehr in Kontakt mit der Patientenlagerfläche 304 steht und die Patientenlagerfläche 304 durch ein Verfahren des Transportwagens 100 einfach von der Operationstischsäule 302 entfernt werden kann.

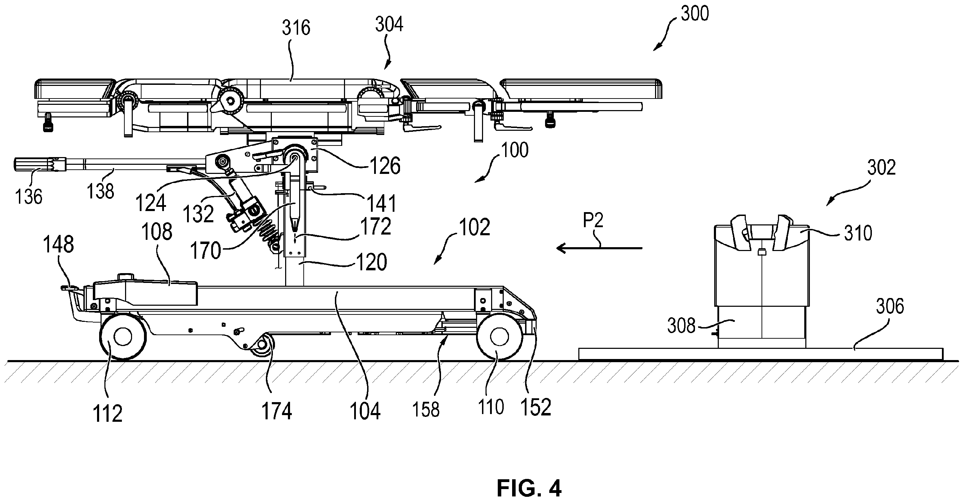

In Figur 4 sind der Transportwagen 100, die Operationstischsäule 302 und die Patientenlagerfläche 304 nach der Übernahme der Patientenlagerfläche 304 durch den Transportwagen 100 gezeigt. Dadurch kann ein auf der Patientenlagerfläche liegender Patient einfach mit Hilfe des Transportwagens 100 auf der Patientenlagerfläche liegend 304 transportiert werden. An die Operationstischsäule 302 kann dann eine andere gleichartige Patientenlagerfläche übergeben werden. Diese wird der Operationstischsäule 302 vorzugsweise mit Hilfe des Transportwagens 100 übergeben.

Durch die Höhenverstellung der Stützen 120, 122 kann die Höhe der Patientenlagerfläche 304 so eingestellt werden, dass ein Patient einfach von der Patientenlagerfläche 304 aufstehen kann und dabei den Fußboden bequem mit seinen Füßen erreichen kann. Alternativ kann die Patientenlagerfläche 304 auf eine geeignete Höhe zur Übergabe des Patienten auf einen weiteren Behandlungstisch, wie beispielsweise einen Röntgentisch, oder auf die Höhe eines Patientenbetts, in das der Patient von der Patientenlagerfläche 304 umgebettet werden soll, gebracht werden.

Im vorliegenden Ausführungsbeispiel hat der Transportwagen 100 nur ein Führungsrad 174. Bei anderen Ausführungsbeispielen hat der Transportwagen an jedem der Längsholme 104, 106 jeweils mindestens ein absenkbares Führungsrad 174.

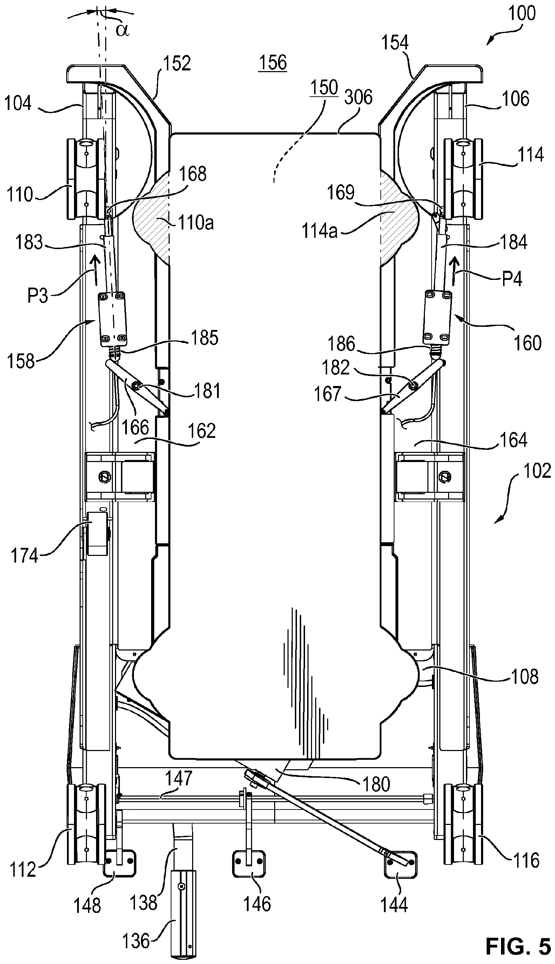

Figur 5 zeigt eine Ansicht des Transportwagens 100 und der Operationstischsäule 302 von unten. In dieser Darstellung ist die mit dem Fußhebel 144 gekoppelte Hydraulikpumpe 180 zu sehen. Ferner ist ein mit dem Fußhebel 146 gekoppeltes Bremsgestänge 147 zum Bremsen der Lenkrollen 110 bis116 sichtbar. Die möglichen Kollisionsbereiche bei einem Umschwenken der vorderen Lenkrollen 110, 114 nach innen bei einer Bewegungsumkehr des Transportwagens 100 sind als schraffierte Flächen 110a, 114a dargestellt. Ferner sind die Begrenzungseinheiten 158, 160 mit den Eingriffselementen 166, 167, den Teleskopstäbe 183, 184 und den Kontaktelementen 168, 169 dargestellt. Durch den Kontakt der Eingriffselemente 166, 167 mit der Teleskopstütze 308 des Operationstischs 300 bei einer Bewegung der Operationstischsäule 302 in die gabelförmige Öffnung 150 des Transportwagens 100 hinein werden diese Eingriffselemente 166, 167 um ihre jeweilige Drehachse 181, 182 bewegt und drücken einen Teleskopführungsstab 183, 184 gegen die Federkraft einer Feder 185, 186 in Richtung der vorderen Lenkrollen 110, 114, da die Eingriffselemente 166, 167 das hintere Ende der Teleskopstäbe 183, 184 kontaktieren und in Richtung der Pfeile P3 und P4 verschieben. Dadurch werden die am vorderen Ende der Teleskopstäbe 183, 184 angeordneten Kontaktelemente 168, 169 in der dargestellten Ausrichtung der Lenkrollen 110, 114 seitlich neben den Lenkrollen 110, 114 positioniert, sodass die Lenkrollen 110, 114 nicht nach innen, d.h. nicht zur gabelförmigen Öffnung 150 hin, umschwenken können. Vielmehr schneidet die Längsachse der Teleskopstäbe 183, 184 eine durch die Längsachse der Längsholme 104, 106 verlaufende senkrechte Ebene in einem Winkel a, wodurch die Kontaktelemente 168, 169 bei einer Bewegung der Teleskopstäbe 183, 184 in Richtung der Pfeile P3 und P4 die Kontaktelemente 168, 169 schräg von innen gegen die Innenseiten der Lenkrollen 110, 114 drücken und diese zumindest bei einer Schwenk- und/oder Rollbewegung leicht schräg nach außen stellen indem sie eine auch nach außen wirkende Kraftkomponente auf die Lenkrollen 110, 114 ausüben. Durch diese leichte Schrägstellung nach außen, vorzugsweise im Bereich von 0,2° bis 6°, insbesondere von 0,5° bis 3,5°, um die Schwenkachse der Lenkrollen 110, 114, wird erreicht, dass die Lenkrollen 110, 114 bei einer Bewegungsrichtungsumkehr, d.h. bei einer Bewegung des Transportwagens 100 in Richtung des Pfeiles P2, nach außen und nicht nach innen in die Kollisionsbereiche 110a, 114a, umschwenken, sodass keine Kollision mit dem Operationstischfuß 306 auftreten kann.

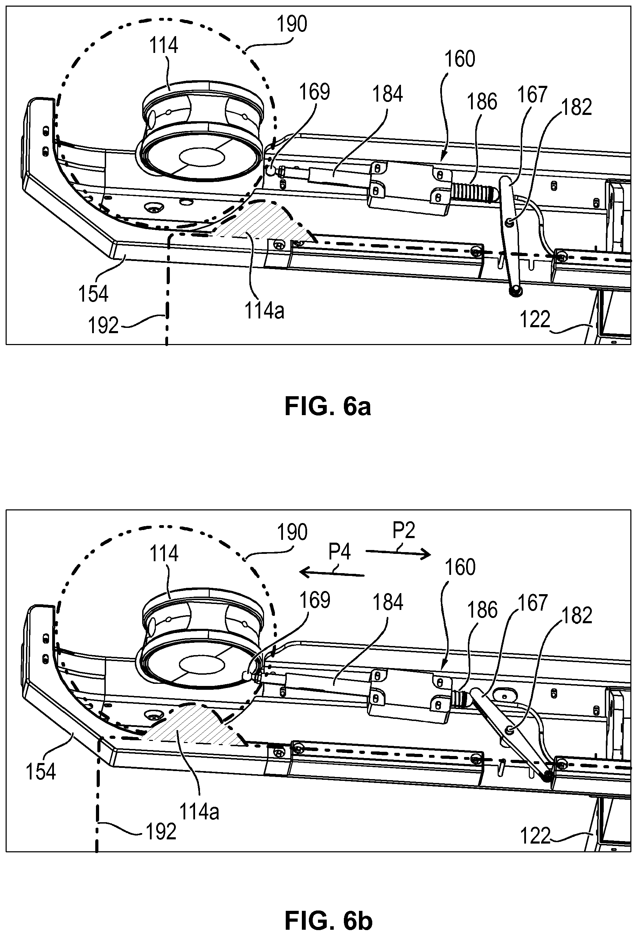

In Figur 6a ist eine perspektivische Darstellung eines Ausschnitts des Transportwagens 100 mit der Lenkrolle 114 und der Begrenzungseinheit 160 zur Begrenzung der Schwenkbewegung der Lenkrolle 114 dargestellt, wobei die Begrenzungseinheit 160 in einem ersten nicht aktivierten Betriebszustand gezeigt ist. In diesem ersten Betriebszustand ist die Operationstischsäule 302 nicht im Bereich des Transportwagens 100 angeordnet, sodass das Eingriffselement 167 den Teleskopstab 184 nicht in Richtung der Lenkrolle 114 verschoben hat. Der Schwenkbereich der Lenkrolle 114 ist mit Hilfe der Strich-Doppelpunkt-Linie 190 und der Umriss des Operationstischfußes 306 mit Hilfe der Strich-Punkt-Linie 192 dargestellt. Der mögliche Überlappungsbereich des Schwenkbereichs 190 und der Grundfläche des Operationstischfußes 306 ist durch eine schräge Schraffur 114a markiert. In diesem Bereich 114a kann bei einer Bewegungsrichtungsumkehr des Transportwagens 100 und einem dadurch bewirkten Schwenken der Lenkrolle 114 nach innen eine Kollision mit dem Operationstischfuß 306 auftreten.

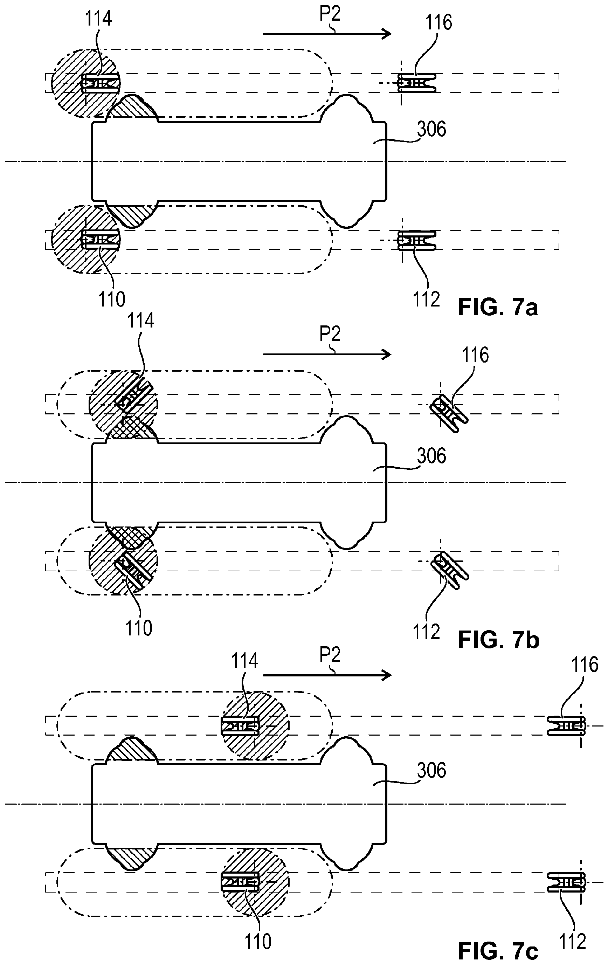

In Figur 6b ist der Ausschnitt des Transportwagens 100 nach Figur 6a gezeigt, wobei die Begrenzungseinheit 160 in einem zweiten aktivierten Betriebszustand gezeigt ist. Der zweite Betriebszustand wird dabei automatisch aktiviert, wenn der Transportwagen 100 in Richtung des Pfeiles P1 zur Operationstischsäule 302 geschoben wird, d.h. von der in Figur 2 gezeigten Position in die in Figur 3 gezeigte Position. Dadurch wird das Eingriffselement 167 durch seinen Kontakt mit der Teleskopstütze 308 der Operationstischsäule 302 um die Drehachse 182 gedreht, sodass der Teleskopstab 184 in Richtung des Pfeiles P4 verschoben worden ist, wodurch das Kontaktelement 169 die Lenkrolle 114 seitlich kontaktiert und diese zumindest an einem Umschwenken nach innen hindert, vorzugsweise nach außen auslenkt, sodass bei einer nachfolgenden Bewegung in Richtung des Pfeiles P2 des Transportwagens 100 die Lenkrolle 114 nach außen umschwenkt, um sich entsprechend der neuen Bewegungsrichtung in Richtung des Pfeiles P2 auszurichten. In Figur 7a sind eine schematische Darstellung des Operationstischfußes 306 der Operationstischsäule 302 sowie die Schwenkbereiche der Lenkrollen 110, 114 in einer Ansicht von unten dargestellt, wobei der Schwenkbereich der Lenkrollen 110, 114 in ihrer aktuellen Position schraffiert dargestellt ist. Der bei einer Bewegungsrichtungsumkehr des Transportwagens 100 in Richtung des Pfeiles P2 mögliche Schwenkbereich ist durch eine Strich-Punkt-Linie umrissen. Durch die Begrenzungseinheiten 158, 160 wird, wie in Verbindung mit den Figuren 5, 6a und 6b bereits erläutert, ein Umschwenken der Lenkrollen 110, 114 nach innen verhindert, sodass diese nur nach außen umschwenken können, wie dies in Figur 7b gezeigt ist. Die hinteren Lenkrollen 112, 116 können dabei in eine beliebige Richtung umschwenken, da bei diesen Rollen keine Kollisionsgefahr mit dem Operationstischfuß 306 vorhanden ist. In Figur 7c sind die Lenkrollen 110, 112, 114, 116 nach dem Umschwenken aufgrund der Bewegung in Richtung des Pfeiles P2 dargestellt, sodass ausgehend von dieser Position auch keine Gefahr mehr besteht, dass die vorderen Lenkrollen 110, 114 bei einer weiteren Bewegung des Transportwagens 100 in Richtung des Pfeiles P2 mit den weiteren vorstehenden Elementen des Operationstischsäulenfußes 306 kollidieren. Würden die Lenkrollen 110, 114, anders als in Figur 7b gezeigt, nicht nach außen, sondern nach innen umschwenken, würden diese in dem Überlappungsbereich des Schwenkbereichs 190 und des Operationstischfußes 306 mit diesem kollidieren, sodass eine weitere Bewegung des Transportwagens 100 in Richtung des Pfeiles P2 dann nicht oder nur unter sehr hohem Kraftaufwand möglich wäre.

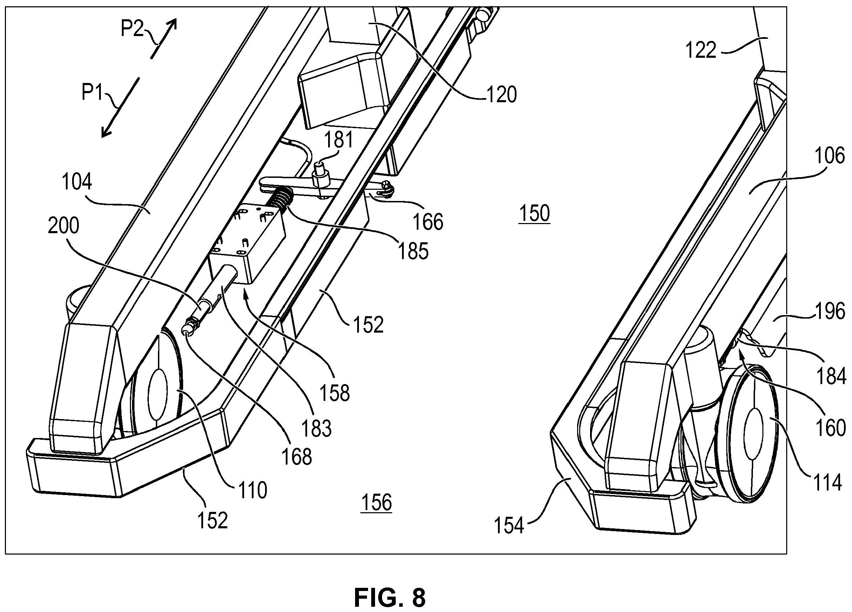

Figur 8 zeigt einen Ausschnitt des Transportwagens 100 mit den beiden Längsholmen 104, 106 und den Begrenzungseinheiten 158, 160, wobei die Begrenzungseinheiten 158, 160 im ersten nicht aktivierten Betriebszustand dargestellt sind. Zur besseren Darstellung der Begrenzungseinheiten 158, 160 sind die zwischen den Längsholmen 104, 106 und den Führungselementen 152, 154 vorgesehene Abdeckbleche 162, 164 nicht sowie ein seitliches Abdeckblech 196 gebrochen dargestellt. Die Eingriffselemente 166, 167 werden in diesem ersten Betriebszustand nicht ausgelenkt, da sich in der gabelförmigen Öffnung 150 keine Operationstischsäule 302 befindet. Durch die Federkraft der Feder 185 der Begrenzungseinheit 158 ist der Teleskopstab 183 in seine Freigabeposition bewegt worden, die er im ersten Betriebszustand hat. Dadurch ist das Eingriffselement 166 in die in Figur 8 gezeigte Ausgangslage bewegt worden. In gleicher Weise ist das Eingriffselement 167 der Begrenzungseinheit 160 in die Freigabeposition bewegt worden, die es im ersten Betriebszustand der Begrenzungseinheit 160 hat. In diesem in Figur 8 gezeigten ersten Betriebszustand der Begrenzungseinheiten 158, 160 ist eine freie Schwenkbewegung der Lenkrollen 110, 114 möglich, sodass sich der Transportwagen 100 insbesondere dann einfach in jede beliebige Richtung verschieben lässt, wenn die Führungsrolle 174 angehoben ist und keinen Kontakt zum Fußboden hat.

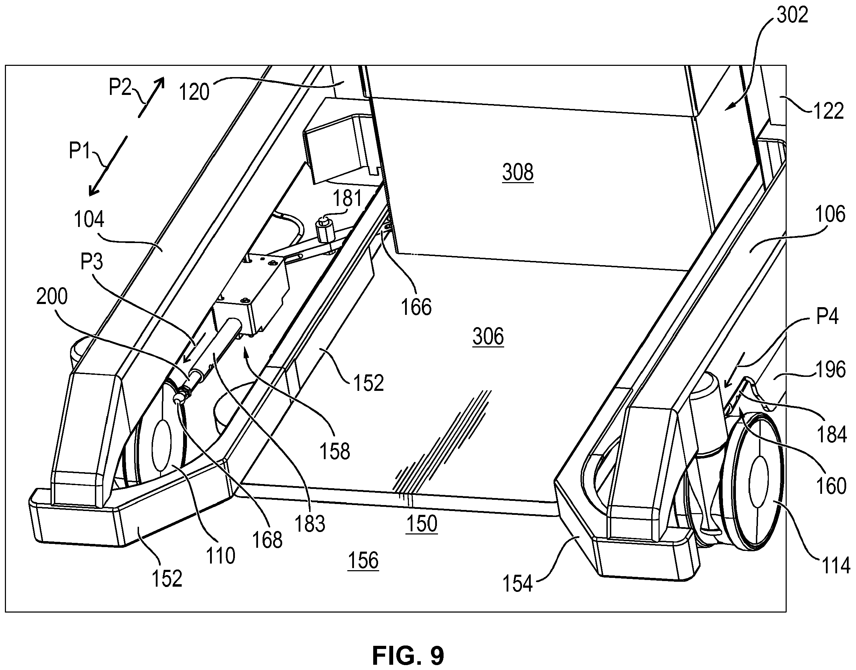

In Figur 9 ist der Ausschnitt des Transportwagens 100 nach Figur 8 und der in der gabelförmigen Öffnung 150 positionierten Operationstischsäule 302 gezeigt. Die Operationstischsäule 302 wurde in der gabelförmigen Öffnung 150 durch ein Bewegen des Transportwagens 100 in Richtung des Pfeiles P1 aufgenommen, wobei bei der Bewegung des Transportwagens 100 in Richtung des Pfeiles P1 von der in Figur 2 gezeigten Position in die in Figur 3 gezeigten Position die Eingriffselemente 166, 167 in Kontakt mit der Teleskopstütze 308 der Operationstischsäule 302 kommen, sodass die Eingriffselemente 166, 167 um ihre jeweilige Drehachse 181, 182 gedreht werden. Dadurch werden die Teleskopstäbe 183, 184 in Richtung der Pfeile P3 und P4 verschoben, sodass die am vorderen Ende der Teleskopstäbe 183, 184 angeordneten Kontaktelemente 166, 167 gegen die Innenseiten der Lenkrollen 110, 114 gedrückt werden. Dadurch wird ein Umschwenken der Lenkrollen 110, 114 nach innen auf einfache Art und Weise verhindert und ein Umschwenken der Lenkrollen 110, 114 bei einer Bewegung des Transportwagens 100 in Richtung des Pfeiles P2 nach außen erfolgt.

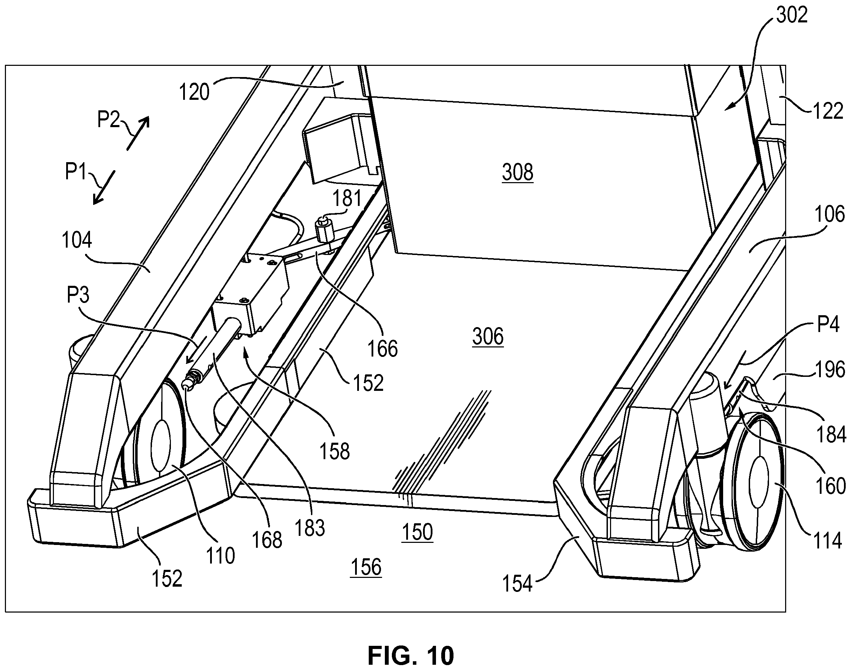

In Figur 10 ist ein Ausschnitt des Transportwagens 100 und der Operationstischsäule 302 nach Figur 9 gezeigt, wobei die Begrenzungseinheiten 158, 160 im zweiten Betriebszustand dargestellt sind. Im Unterschied zu der in Figur 9 gezeigten Begrenzungsposition der Kontaktelemente 166, 167 der Begrenzungseinheiten 158, 160 sind die Kontaktelemente 166, 167 in Figur 10 in einer Freigabeposition gezeigt. In diese Freigabeposition werden die Kontaktelemente 166, 167 automatisch beim Aktivieren von Verbindungselementen 140, 142 zum Verbinden des Transportwagens 100 mit der Operationstischsäule 302 gebracht. Hierzu sind die Verbindungselemente 140, 142 jeweils über einen Bowdenzug mit der dem jeweiligen Verbindungselement 140, 142 zugeordneten Begrenzungseinheit 158, 160 verbunden. Werden die Verbindungselemente 140, 142 in eine Eingriffsposition zum Eingriff mit der Operationstischsäule 302 gebracht, wird die Bowdenzugseele im Bereich der Verbindungselemente 140, 142 aus der Bowdenzughülle herausgezogen. Dies bewirkt, dass die mit dem vorderen Teilstück des jeweiligen Teleskopstabs 183, 184 gekoppelte Bowdenzugseele dieses vorderen Teilstücks des Teleskopstabs 183, 184 in das hintere Teilstück des zylindrischen Stabes gegen ein in dem Teleskopstab 183, 184 angeordnetes elastisch verformbares Element, das als Schraubenfeder ausgeführt ist, gezogen wird, sodass hierdurch die Schwenkbewegung der Lenkrollen 110, 114 trotz Aktivierung des zweiten Betriebszustands freigegeben wird. Durch die Aktivierung der Verbindungselemente 140, 142 wird die Operationstischsäule vom Fußboden abgehoben, wenn die Teleskopstütze 308 verkürzt wird oder die Stützen 120, 122 ausgefahren werden. Dadurch sind die Lenkrollen 110, 114 außerhalb der Kollisionsbereiche 110a, 114a. Somit ist bei einem angehobenen Operationstischfuß 306 eine Begrenzung der Schwenkbewegung der Lenkrollen 310, 314 nicht erforderlich. Vielmehr ist es vorteilhaft, dass die Schwenkbewegung der Lenkrollen 110, 114 vollständig freigegeben wird, damit die Operationstischsäule 302 und ggf. eine mit der Operationstischsäule 302 und/oder dem Transportwagen 100 verbundenen Patientenlagerfläche 304 auch seitlich, d.h. insbesondere quer zu den Bewegungsrichtungen P1 und P2, verschoben werden kann.

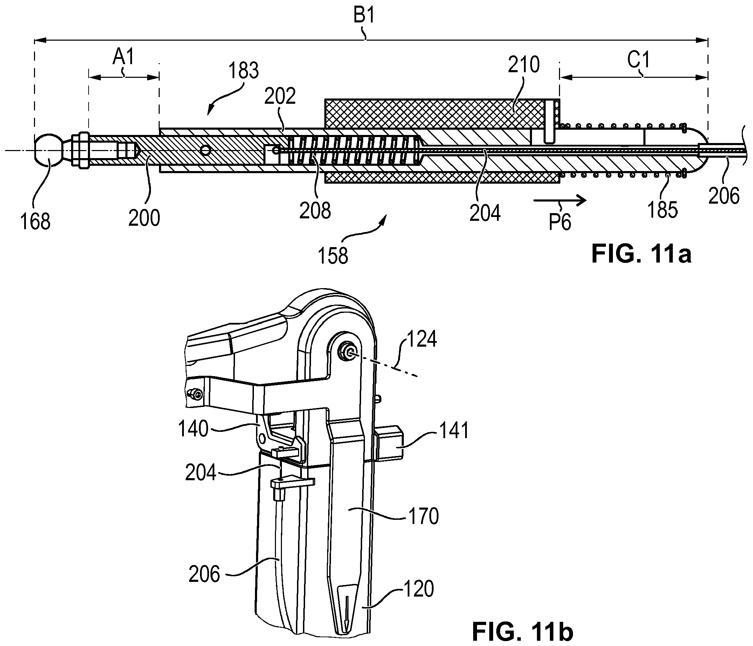

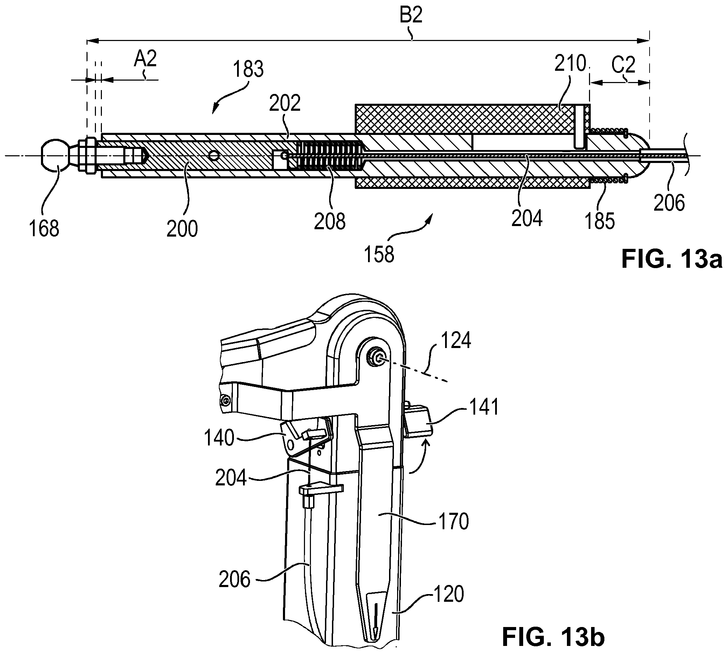

In Figur 11a ist eine Schnittdarstellung der Begrenzungseinheit 158 dargestellt. Die Begrenzungseinheit 160 ist baugleich, jedoch spiegelverkehrt, und angeordnet aufgebaut. Der Teleskopstab 183 hat ein hinteres Teilstück 202 mit einer zylinderförmigen Öffnung, in die ein vorderes Teilstück 200 hineinragt. Das vordere Teilstück 200 ist mit dem Ende einer Bowdenzugseele 204 verbunden, sodass bei einer Bewegung der Bowdenzugseele 204 in Richtung des Pfeils P6 in eine Bowdenzughülle 206 hinein das vordere Teilstück 200 des Teleskopstabs 183 gegen die Federkraft der Feder 208 gezogen wird und sich der Abstand A1 sowie der Gesamtabstand B1 des Teleskopstabs 183 mit dem am vorderen Ende befestigten Kontaktelement 168 verkürzt, wie dies nachfolgend in Verbindung mit den Figuren 13a und 13b noch näher erläutert wird. Ferner dient die Feder 208 als Überlastschutz, in dem die Feder 208 zusammen gedrückt wird, wenn das Kontaktelement 168 nicht neben dem Laufrad der Lenkrolle 110, 114 sondern auf die Lauffläche des Laufrads trifft oder durch ein anderes Element an der Bewegung behindert wird. Die Begrenzungseinheit 158 ist in Figur 11a in dem ersten Betriebszustand dargestellt, in dem weder das vordere Teilstück 200 mithilfe der über die Bowdenzuhülle 204 eingeleitete Kraft in die zylinderförmige Öffnung des hinteren Teilstücks 202 hineingezogen, noch der Teleskopstab 183 mit Hilfe des Eingriffselements 166 in Richtung des Pfeils P2 gegen die Federkraft der Feder 185 in Richtung des Pfeils P3 bewegt worden ist. In diesem ersten Betriebszustand steht das hintere Ende des Teleskopstabs 183 nach hinten aus einem Führungsblock 210 um die mit C1 bezeichnete Länge hervor.

In Figur 11b ist ein Ausschnitt des Transportwagens 100 mit dem Verbindungselement 140 zum Verbinden des Transportwagens 100 mit der Operationstischsäule 302 in einer Position dargestellt, in der die Verbindungselemente 140, 142 nicht mit der Operationstischsäule 302 in Eingriff gebracht worden sind. Dadurch ist die Bowdenzugseele 204 im Bereich des Verbindungselements 140 nicht aus der Bowdenzughülle 206 herausgezogen, sodass das vordere Teilstück 200 nicht gegen die Federkraft der Feder 208 in das hintere Teilstück 202 hineingezogen worden ist und die in Figur 11a gezeigte Position hat.

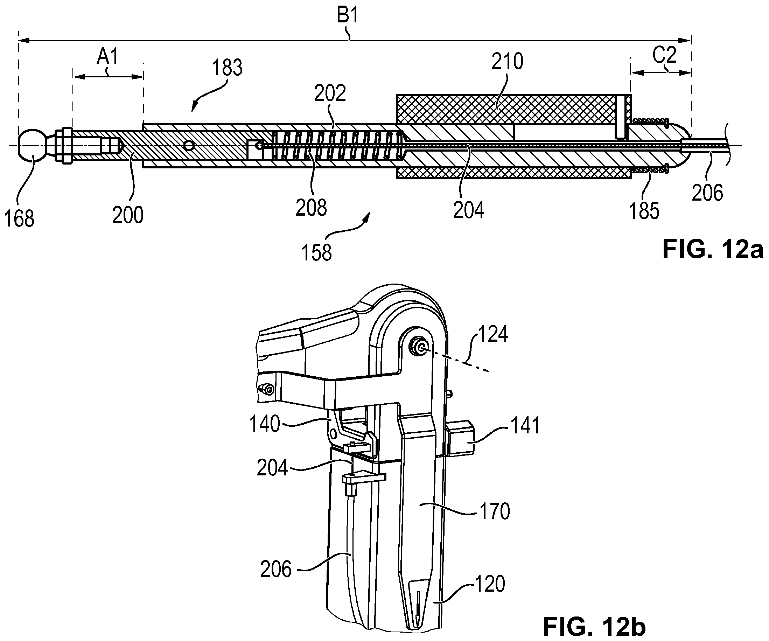

In Figur 12a ist eine Schnittdarstellung der Begrenzungseinheit 158 nach Figur 11a im zweiten Betriebszustand gezeigt, in dem das Eingriffselement 166 den Teleskopstab 183 in Richtung des Pfeils P3 (siehe Figur 10) verschoben hat, sodass der Teleskopstab 183 nur noch mit der Länge C2 aus dem Führungsblock 210 hervorsteht. Die Längen B1 und A1 stimmen mit den Längen der ersten Betriebsposition nach Figur 11a überein. Die in Figur 12a gezeigte Position der Längsholme 104, 106 ist somit die Position der Begrenzungseinheit 158 nach dem Positionieren des Transportwagens 100 um die Operationstischsäule 302 herum.

Figur 12b zeigt den in Figur 11b dargestellten Ausschnitt des Transportwagens 100 in unverändertem Zustand, d. h. die Verbindungselemente 140, 142 sind noch nicht in ihre Eingriffsposition zum Eingriff mit der Operationstischsäule 302 gebracht worden, sodass der das vordere Teilstück 200 auch noch nicht mithilfe des Bowdenzugs gegen die Feder 208 in die Öffnung des zweiten Teilstücks 202 hinein bewegt worden ist.

In Figur 13a ist eine Schnittdarstellung der Begrenzungseinheit 158 nach den Figuren 11a und 12a im zweiten Betriebszustand gezeigt, wobei das Kontaktelement 168 der Begrenzungseinheit 158 von einer Begrenzungsposition in eine Freigabeposition gebracht worden ist. Hierzu ist das Verbindungselement 140 mit Hilfe des Schwenkhebels 141 in eine Eingriffsposition zum Eingriff mit der Operationstischsäule 302 gebracht worden, wie dies in Figur 13b gezeigt ist. Hierzu ist ein Hebel 141 betätigt worden, sodass die Verbindungselemente 140 mit komplementären Eingriffselementen der Operationstischsäule 302 in Eingriff kommen, wenn die Teleskopstütze 308 der Operationstischsäule 302 verkürzt oder die Höhe der Verbindungselemente 140 durch die höhenveränderlichen senkrechten Stützen 120, 122 vergrößert worden ist. Dabei wird die Bowdenzugseele 204 aus der Bowdenzughülle 206 herausgezogen, wie dies ebenfalls aus Figur 13b bei einem Vergleich mit den Figuren 11b und 12b ersichtlich ist. Die Begrenzungseinheit 158 befindet sich nach wie vor im zweiten Betriebszustand, sodass die Länge, mit der der Teleskopstab 183 nach hinten aus dem Führungsblock 210 hervorsteht wie in Figur 12a, die Länge C2 ist. Die Gesamtlänge des Teleskopführungsstabs ist von der Länge B1 auf die Länge B2 verkürzt worden und der Abstand, mit dem das vordere Teilstück 200 aus der Öffnung des hinteren Teilstücks 202 hervorsteht, ist von der Länge A1 auf die Länge A2 verkürzt worden. Dadurch kann die Begrenzung der Schwenkbewegung der Lenkrolle 110, 114 auch dann einfach aufgehoben werden, wenn sich die Begrenzungseinheit 158 im zweiten Betriebszustand befindet. Dies ist insbesondere dann sinnvoll und möglich, wenn der Operationstischsäulenfuß 302 durch die Verbindung zwischen dem Transportwagen 100 und der Operationstischsäule 302 angehoben wird, sodass im angehobenen Zustand keine Kollisionsgefahr zwischen den Lenkrollen 110, 114 und dem Operationstischfuß 306 besteht.

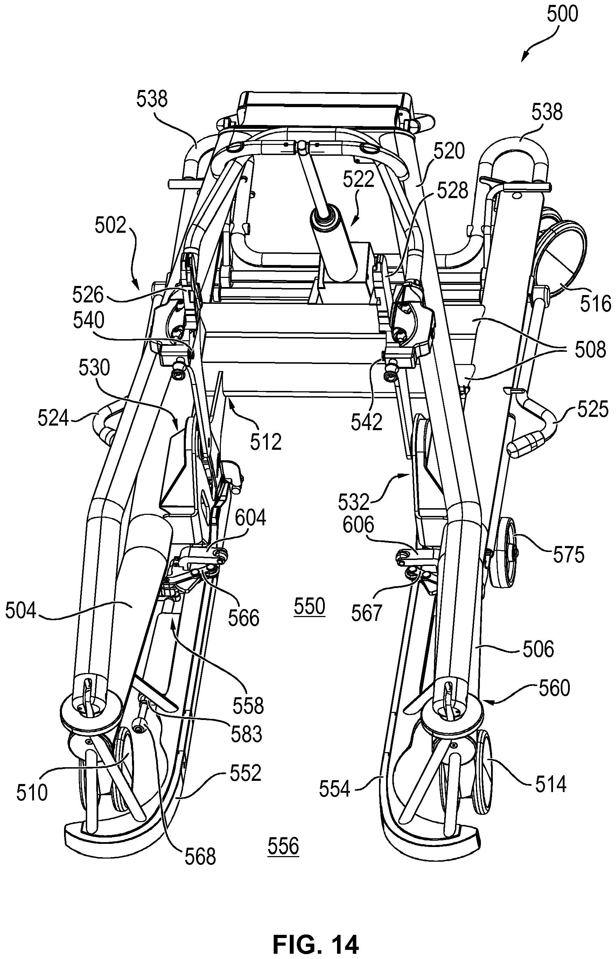

In Figur 14 ist eine perspektivische Vorderansicht eines Transportwagens 500 zum Transport einer Operationstischsäule und/oder einer Patientenlagerfläche eines Operationstischs gemäß einer zweiten Ausführungsform dargestellt. Der Transportwagen 500 hat ein allgemein mit 502 bezeichnetes Fahrgestell mit einem ersten Längsholm 504 und einem zweiten Längsholm 506, die in einem Abstand zueinander in einer horizontalen Ebene nebeneinander angeordnet sind und eine gabelförmige Öffnung 550 bilden. Ferner sind zwei mit 508 gekennzeichnete Querholme vorgesehen, der die Längsholme 504, 506 in der hinteren Hälfte des Transportwagens 500 miteinander verbindet. An den vorderen und hinteren Enden der Längsholme 504, 506 sind Lenkrollen 510 bis 516 angeordnet. Zwischen den Lenkrollen 510, 512 und 514, 516 ist jeweils ein absenkbares Führungsrad 574, 575 angeordnet. Der Transportwagen 500 hat einen an den vorderen Enden der Längsholme 504, 506 angelenkten Schwenkrahmen 520, der um eine durch die Anlenkpunkte definierte Schwenkachse mithilfe einer Hydraulikeinheit 522 verschwenkt werden kann. Die Hydraulikeinheit 522 ist über eine über Fußhebel 524, 525 betätigbare Hydraulikpumpe verschwenkbar. An dem Schwenkrahmen 520 sind Verbindungselemente 526, 528 zur Verbindung des Transportwagens 500 mit einer Patientenlagerfläche eines Operationstischs vorgesehen. Ferner ist eine Mechanik zur gleichbleibenden Ausrichtung der Verbindungselemente 526, 528 zum Verbinden des Transportwagens 500 mit der Patientenlagerfläche des Operationstischs als auch von Verbindungselementen 540, 542 zur Verbindung des Transportwagens 500 mit einer Operationstischsäule vorgesehen. Diese Mechaniken zur Ausrichtung der Verbindungselemente sind allgemein mit den Bezugszeichen 530, 532 bezeichnet. Die Verbindungselemente 540, 542 sind über ein Kopplungselement miteinander verbunden, sodass die Verbindungselemente 540, 542 immer gemeinsam aktiviert und deaktiviert werden. Der Transportwagen 500 hat ferner ein Fußbetätigungselement 538 zur Aktivierung einer in den Lenkrollen 510 bis 516 integrierten Bremse.

Die Längsholme 504, 506 sind jeweils mit einem Führungselement 552, 554 verbunden, die so geformt sind, dass sie im vorderen Bereich der gabelförmigen Öffnung 550 eine trichterartige Öffnung 556 bilden, durch die der Transportwagen 500 einfach um eine Teleskopstütze der Operationstischsäule herum positioniert werden kann.

Wie in Verbindung mit der ersten Ausführungsform gemäß den Figuren 1 bis 13 beschrieben, kann bei einer Schwenkbewegung der Lenkrollen 510, 514 nach innen, d. h. zu der gabelförmigen Öffnung 550 hin eine Kollision mit dem Operationstischfuß eines mobilen Operationstisch auftreten, die eine Bewegung des Transportwagens 500 beispielsweise nach einer Übernahme oder Übergabe einer Patientenlagerfläche eines Operationstischs erschwert oder ganz verhindert. Um dies zu vermeiden sind Begrenzungseinheiten 558, 560 vorgesehen, die ähnlich zu den Begrenzungseinheiten 158 und 160 gemäß der ersten Ausführungsform aufgebaut sind. Im Unterschied zu den Begrenzungseinheiten 158, 160 der ersten Ausführungsform sind jedoch die Führungsstäbe 583, 584 der Begrenzungseinheiten 558, 560 nicht als steuerbare längenveränderbare Teleskopstäbe, sondern als ungesteuerte Führungsstäbe 583, 584 ausgeführt. An den vorderen Enden der Führungsstäbe 583, 584 ist jeweils ein Kontaktelement 569, 569 um die Längsachse des jeweiligen Führungsstabs drehbar gelagert angeordnet, sodass bei einem Kontakt des Kontaktelements 568 mit der Lenkrolle 510 bzw. einem Kontakt des Kontaktelements 569 mit der Lenkrolle 514 lediglich eine Rollreibung und keine Gleitreibung auftritt. Die Begrenzungseinheit 558 ist in Figur 14 in einer Freigabeposition dargestellt. Weiter Einzelheiten zur Funktion der Begrenzungseinheiten 558, 560 wird in Verbindung mit den nachfolgenden Figuren noch ausführlich erläutert.

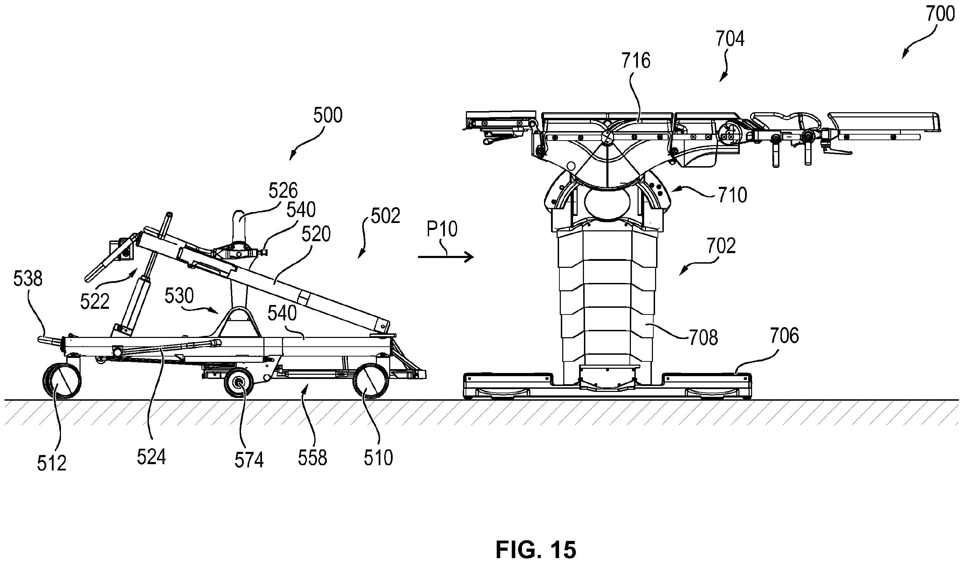

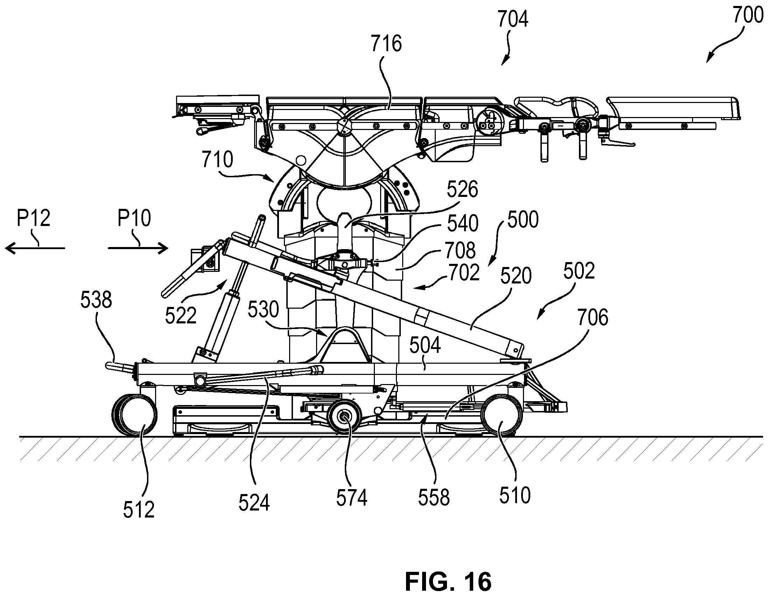

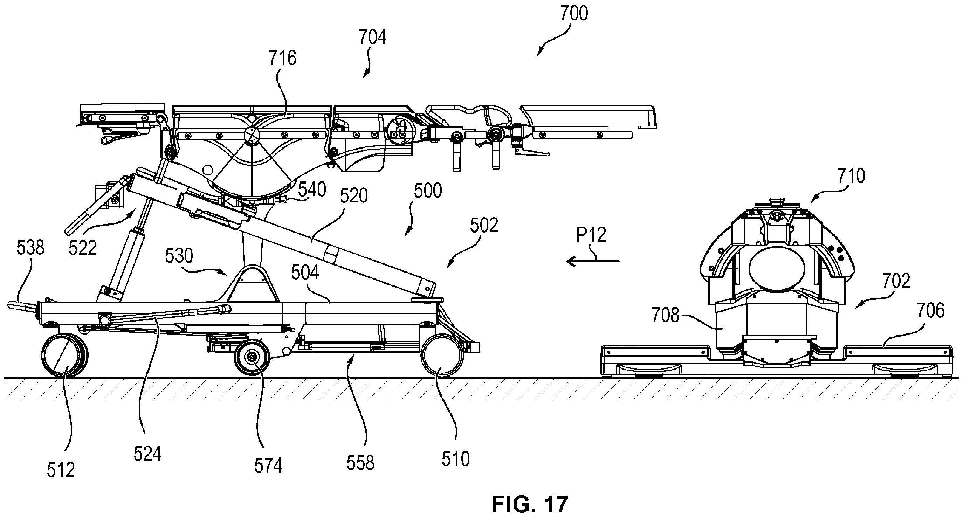

In Figur 15 ist der Transportwagen 500 nach Figur 14 und ein Operationstisch 700 vor der Übernahme einer allgemein mit 704 bezeichneten Patientenlagerfläche des Operationstischs 700 durch den Transportwagen 500 in einer Seitenansicht dargestellt. Der Operationstisch 700 hat ferner eine Operationstischsäule 702, die einen Operationstischfuß 706 und eine Teleskopstütze 708 mit einem Kopfmodul 710. Mithilfe des Kopfmoduls 710 können ein zentrales Mittelteil 716 und die mit dem zentralen Mittelteil 716 verbundenen weiteren Abschnitte der Patientenlagerfläche 704 in ihrer Neigung, Kantung und Längsverschiebung verändert werden. Ferner kann die Patientenlagerfläche 704 mithilfe der Teleskopstütze 708 in ihrer Höhe verändert werden. Zur Übernahme der Patientenlagerfläche 704 wird der Transportwagen 500 in Richtung des Pfeils P10 verschoben, sodass die Operationstischsäule 704 in der gabelförmigen Öffnung 550 des Transportwagens 500 positioniert ist und sich dadurch die Verbindungselemente 526, 528 direkt unter komplementären Verbindungselementen der Patientenlagerfläche 704 befinden, wie dies in Figur 16 dargestellt ist. Zur Übernahme wird dann die Teleskopstütze 708 des Operationstischs 700 verkürzt, sodass die Verbindungselemente 526, 528 des Transportwagens 500 in Eingriff mit dem komplementären Verbindungselementen der Patientenlagerfläche 704 kommen. Dabei wird die Verbindung zwischen der Patientenlagerfläche 704 und dem Operationstischkopf 710 automatisch getrennt. Anschließend wird der Transportwagen in Richtung des Pfeils P12 von der Operationstischsäule 702 zusammen mit der Patientenlagerfläche 704 entfernt, wie dies in Figur 17 dargestellt ist. Die Übergabe einer Patientenlagerfläche 704 vom Transportwagen 500 auf die Operationstischsäule 702 erfolgt in umgekehrter Reihenfolge.

Der Transportwagen 500 hat einen Akkumulator zur Stromversorgung mindestens einer Antriebseinheit zum Verändern der Neigung der Patientenlagerfläche 704, wenn diese vom Transportwagen 500 übernommen worden ist. Dies ist insbesondere dann erforderlich, wenn ein auf der Patientenlagerfläche 704 liegender Patient in eine Schockstellung gebracht werden muss. Die elektrische Verbindung zwischen der Patientenlagerfläche 704 und dem Transportwagen 500 erfolgt über in die Verbindungselemente 526, 528 integrierte elektrische Kontakte. Die Steuerung der Antriebseinheit zur Veränderung der Neigung der Patientenlagerfläche 704 erfolgt über eine nicht dargestellte mit der Patientenlagerfläche 704 verbundenen Fernbedienung und/oder über an der Patientenlagerfläche 704 und/oder am Transportwagen 500 vorhandenen Bedienelemente.

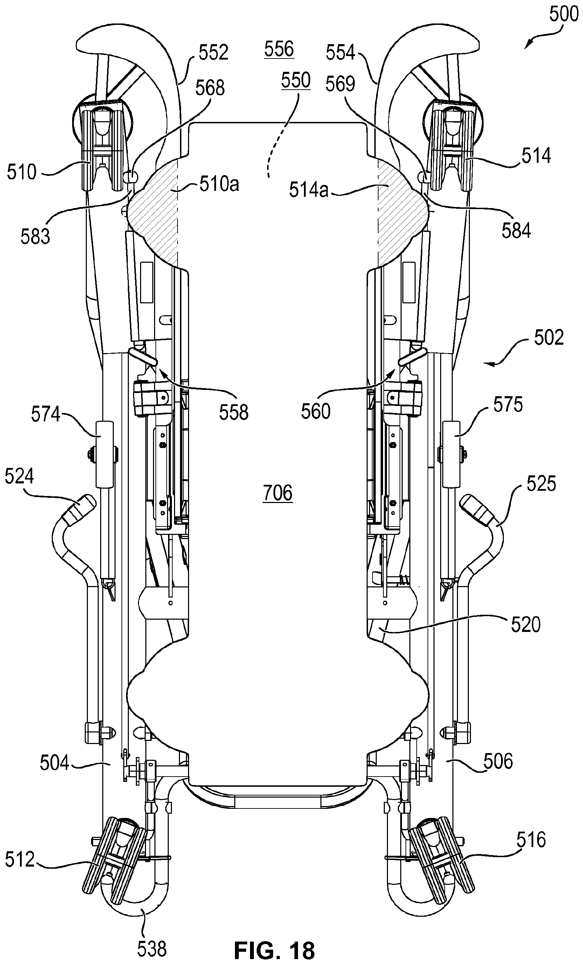

Figur 18 zeigt eine Ansicht des Transportwagens 500 und der Operationstischsäule 702 von unten. Dabei sind möglich Kollisionsbereiche der vorderen Lenkrollen 510, 514 mit dem Operationstischfuß 706 schraffiert dargestellt und mit 510a und 514a bezeichnet.

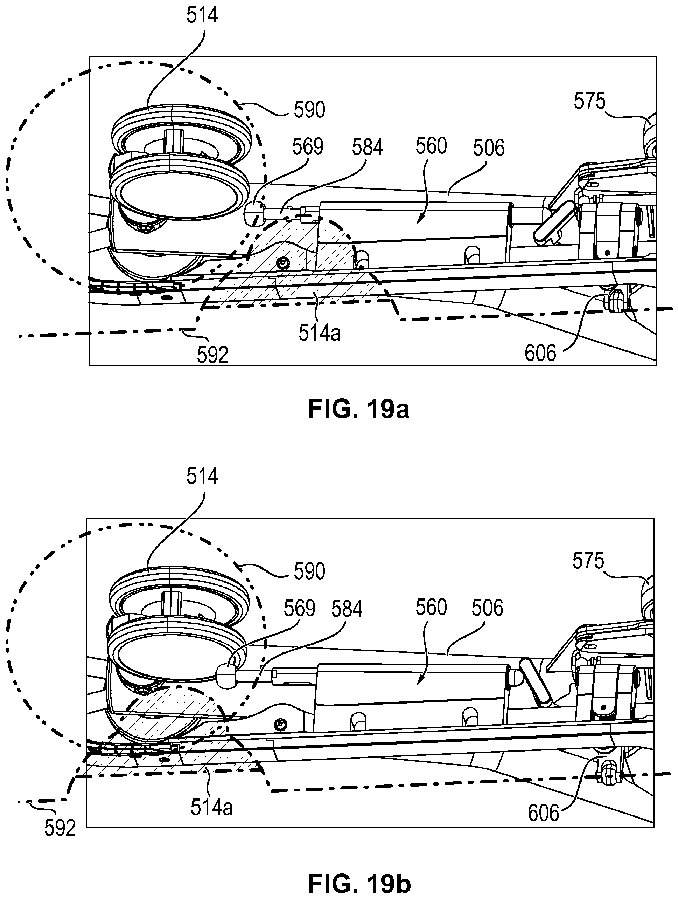

Figur 19a zeigt eine perspektivische Darstellung eines Ausschnitts des Transportwagens 500 mit der Lenkrolle 514. Der Schwenkbereich der Lenkrolle 514 ist mit Hilfe einer Strich-Doppelpunkt-Linie 590 und der Umriss des Operationstischfußes 706 mit Hilfe der Strich-Punkt-Linie 592 dargestellt, wobei der schaffierte Bereich 594 ein möglicher Kollisionsbereich zwischen der Lenkrolle 514 und dem Operationstischfuß 706 ist. Die Begrenzungseinheit 560 ist in Figur 19a in einer Freigabeposition und in Figur 19b in einer Begrenzungsposition gezeigt.

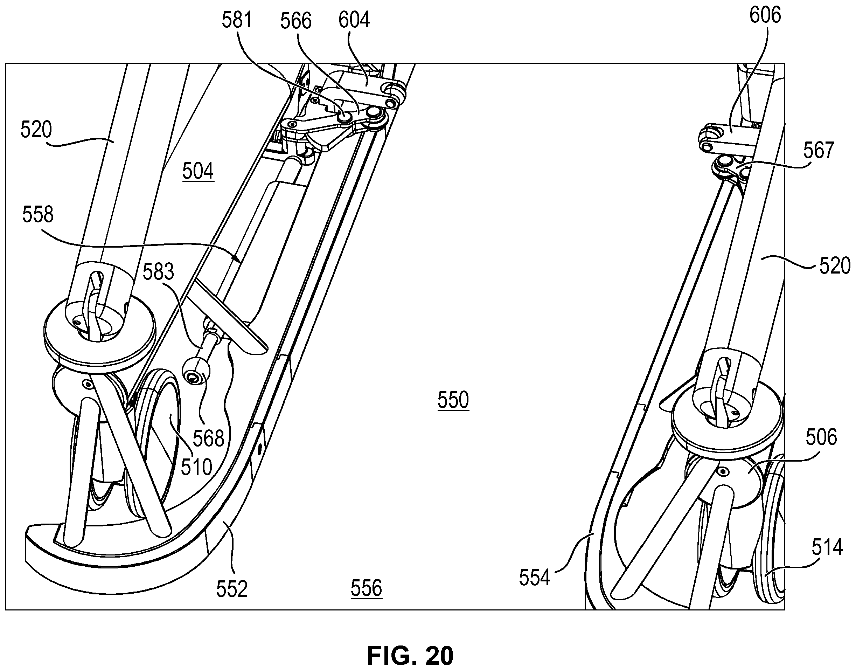

Figur 20 zeigt einen Ausschnitt des Transportwagens 500 mit den beiden Längsholmen 502, 504, wobei die Begrenzungseinheiten 558, 560 in einem ersten Betriebszustand sind, in dem sich die Kontaktelemente 568, 569 in einer Freigabeposition befinden, in der sie die Schwenkbewegung der Lenkrolle, 510, 514 nicht begrenzen.

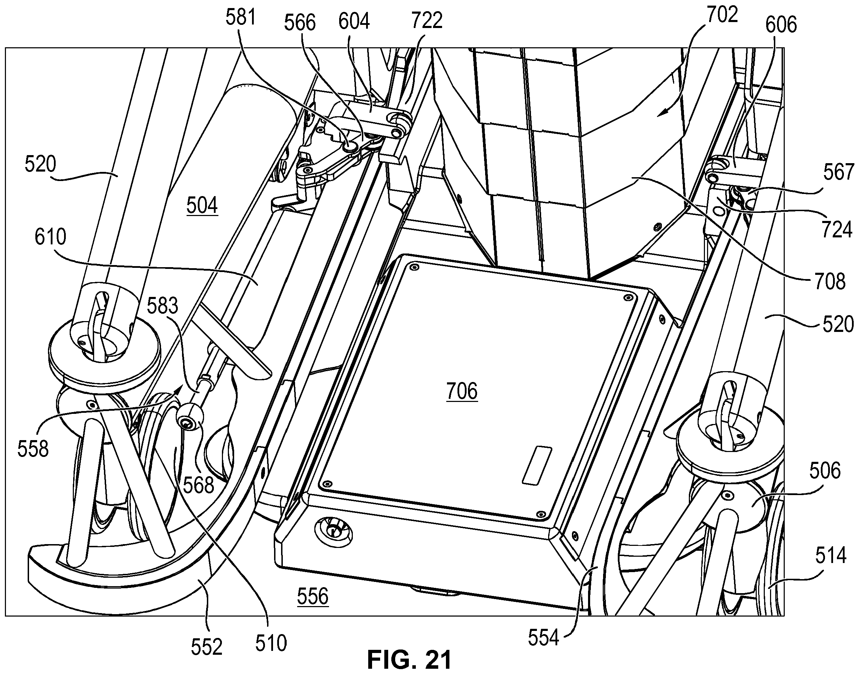

Figur 21 zeigt den Ausschnitt des Transportwagens 500 nach Figur 20 und einen der in der gabelförmigen Öffnung 550 zwischen den Längsholmen 504, 506 angeordneten Operationstischsäule 702. Die Begrenzungseinheiten 558, 560 sind in einem zweiten Betriebszustand, in der sich die Kontaktelemente 568, 569 in einer Begrenzungsposition befinden, in der sie die Schwenkbewegung der Lenkrollen 510, 514 begrenzen, dargestellt. Die Führungsstäbe 583, 584 der Begrenzungseinheiten 558, 560 sind durch den Kontakt eines ersten Eingriffselements 566, 567 mit der Operationstischsäule 702 um ihre jeweilige Drehachse 581, 582 geschwenkt worden, wodurch die Führungsstäbe 583, 584 zusammen mit den an den vorderen Enden der Führungsstäbe 583, 584 vorhandenen Kontaktelementen 568, 569 in eine Begrenzungsposition verschoben sind.

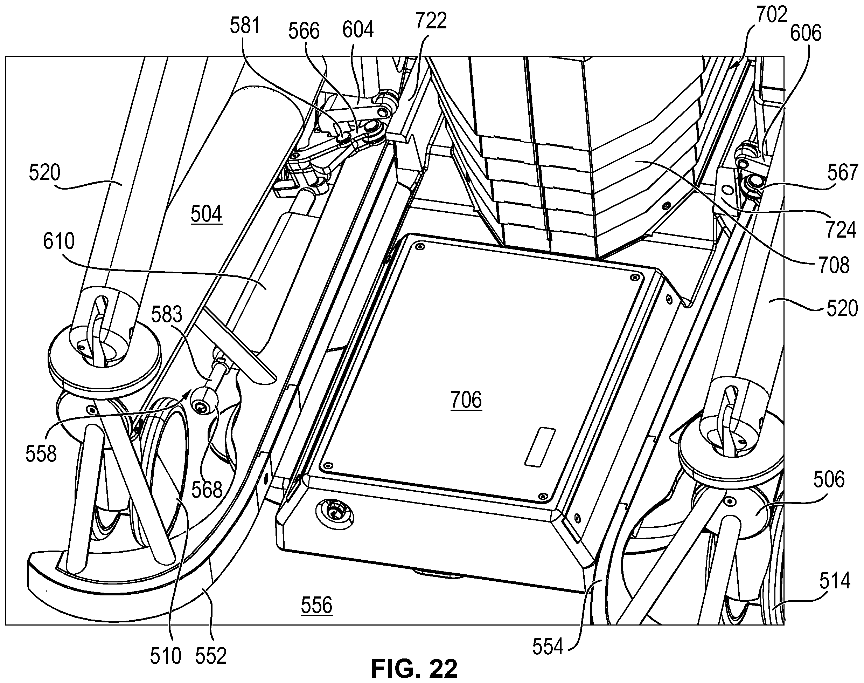

In Figur 22 ist der Ausschnitt des Transportwagens 500 und der Operationstischsäule 702 nach Figur 21 gezeigt, wobei die Begrenzungseinheiten 558, 560 im zweiten Betriebszustand, in dem sich die Operationstischsäule 702 in der gabelförmigen Öffnung 550 des Transportwagens 500 befindet, und somit in einer Freigabeposition dargestellt sind, in der sie die Schwenkbewegung der Lenkrollen 510, 514 nicht begrenzen. Durch ein Anheben des Operationstischsäulenfußes706 wird jeweils ein Vorsprung 722, 724 in Eingriff mit einem zweiten Eingriffselement 604, 606 der Begrenzungseinheiten 558, 560 gebracht, wobei die Eingriffselemente 604, 606 um eine Drehachse 610 geschwenkt werden und bei dieser Schwenkbewegung die Lage des jeweiligen ersten Eingriffselements 566, 567 der jeweiligen Begrenzungseinheit 558, 560 derart verändern, dass die Führungsstäbe 583, 584 aufgrund der Federkraft einer in dem Führungsblock 610 der jeweiligen Begrenzungseinheit 558, 560 integrierten Feder in die Freigabeposition zurück bewegt werden, sodass die Schwenkbewegung der Lenkrollen 510, 514 nach dem Anheben des Operationstischsäulenfußes706 nicht mehr begrenzt ist. Dadurch kann der Transportwagen 500 in jede beliebige Richtung verschoben werden.

Als Längsachsen der geschwungenen Längsholme 504, 506 werden die Geraden durch die Querschnittsmittelpunkte der Längsholme 504, 506 an den Schwenkachsen der Lenkrollen 510, 512 sowie 514, 516 angesehen. Eine senkrechte Mittelebene des Transportwagens 500 ist dabei so definiert, dass die Schwenkachsen der Lenkrollen 510, 514 sowie die Schwenkachsen der Lenkrollen 512, 516 jeweils den gleichen horizontalen Abstand zu dieser senkrechten Mittelebene haben.

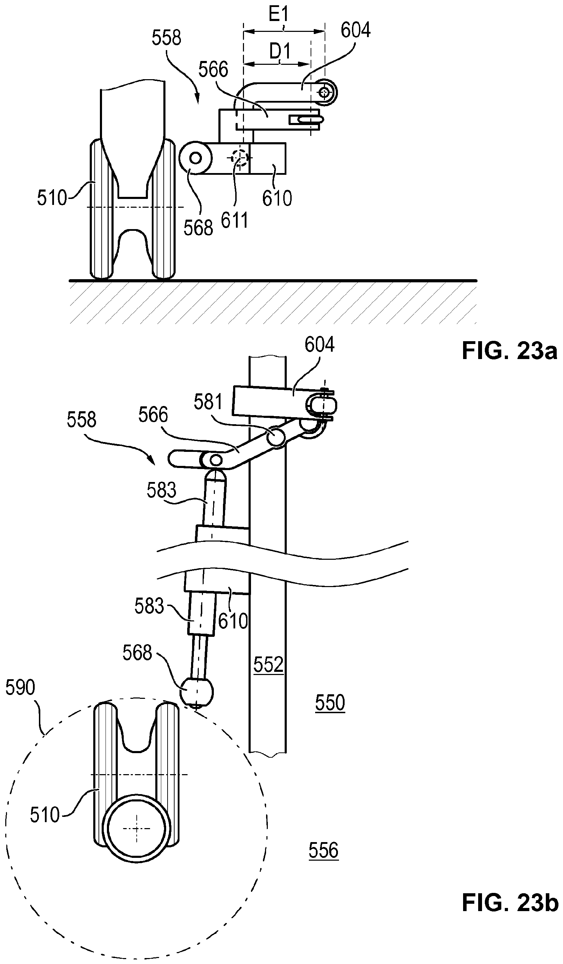

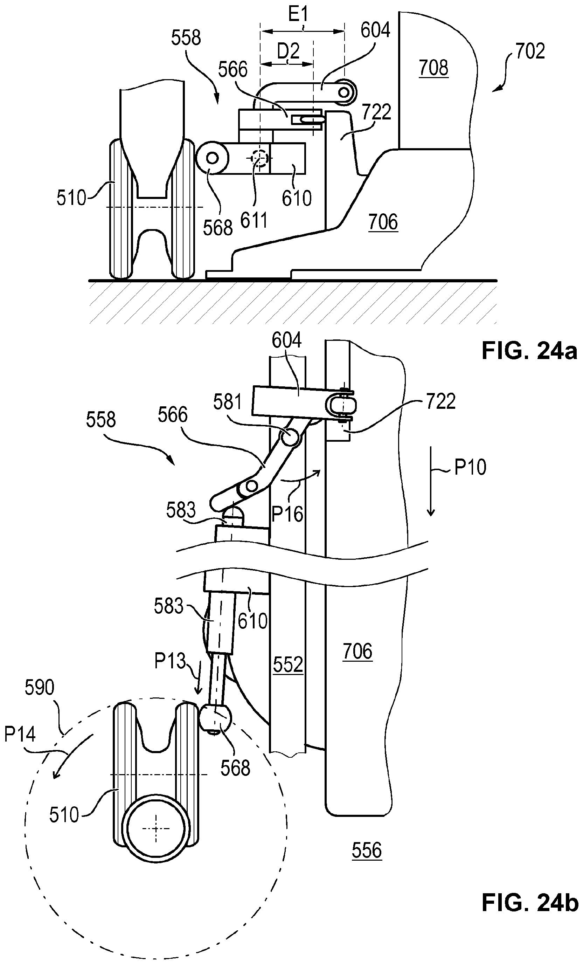

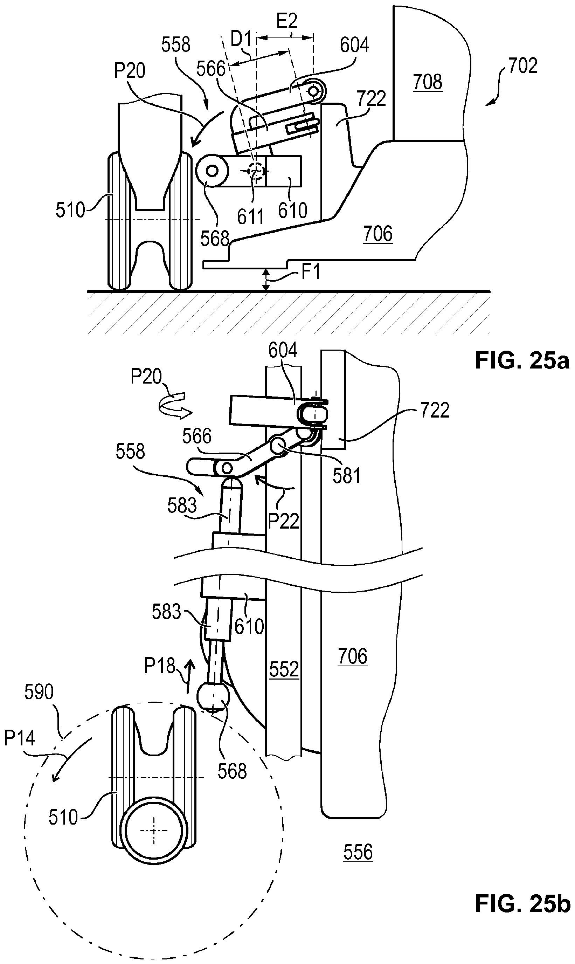

Figur 23a zeigt eine Vorderansicht der Begrenzungseinheit 558 im ersten Betriebszustand zusammen mit der Lenkrolle 510. Die Anordnung aus dem Eingriffselement 566 und dem Eingriffselement 604 ist dabei um eine Drehachse 611 schwenkbar, um die sie aus der Figur 23a dargestellten Position beim Anheben des Operationstischsäulenfußes 706 durch den Eingriff der Vorsprünge 722 der Operationstischsäule 702 mit dem Eingriffselement 604bewegt wird, sodass das erste Eingriffselement 566 soweit um die Drehachse 611 gedreht wird, bis es nicht mehr im Eingriff mit dem Operationstischsäulenfuß 706 steht. Dadurch wird die Begrenzungseinheit 558 bzw. deren Kontaktelement 568 automatisch beim Anheben des Operationstischsäulenfußes 706 von einer Begrenzungs- in eine Freigabeposition gebracht, wie dies nachfolgend in Verbindung mit den Figuren 24a, 24b, 25a und 25b noch näher erläutert wird. Bei den Darstellungen der Figuren 23a und 23b steht weder das Eingriffselement 566 noch das Eingriffselement 604 in Eingriff mit dem Operationstisch 700, sodass sich die Begrenzungseinheit 558 sich im ersten Betriebszustand, d. h. in einer Freigabeposition befindet, in der das Kontaktelement 568 die Schwenkbewegung der Lenkrolle 510 nicht begrenzt.

Figur 24a zeigt eine Vorderansicht der Anordnung nach Figur 23a in einer Begrenzungsposition in einem zweiten Betriebszustand und Figur 24b eine Draufsicht auf die Lenkrolle 510 und die Begrenzungseinheit 558 in der Begrenzungsposition im zweiten Betriebszustand. Das erste Eingriffselement 566 steht in Eingriff mit der Operationstischsäule 702 und wird dadurch um die Drehachse 581 gedreht, wodurch das erste Eingriffselement 566 den Führungsstab 583 in Richtung des Pfeils P13 bewegt, sodass das Kontaktelement 568 in den Schwenkbereich 590 gebracht und die Schwenkbewegung der Lenkrolle 510 dadurch begrenzt wird. Bei der Bewegung des Führungsstabs 583 mit dem Kontaktelement 568 wird ein durch die Bewegung des Transportwagens 500 in Richtung des Pfeils P10 ausgerichtete Lenkrolle 510 in Richtung des Pfeils P14 ausgelenkt, vorzugsweise um einen Winkel im Bereich von 0,5° bis 5°, insbesondere um 3°.

Beim Kontakt des ersten Eingriffselements 566 mit dem Operationstischfuß 706 wird das Eingriffselement 566 um die Drehachse 581 in Pfeilrichtung des Pfeils P16 verschwenkt. Der in Figur 24a angegebene Abstand E1 des zweiten Eingriffselements 604 zu der Drehachse 610 stimmt in dem Abstand E1 nach Figur 23a überein. Der Abstand D1 des Eingriffselements 566 nach Figur 23a ist durch den Eingriff des Eingriffselements 566 mit der Operationstischsäule 702 auf den Abstand D2 verringert worden.

In Figur 25a ist eine Vorderansicht der Begrenzungseinheit 558 nach den Figuren 23a und 24a im zweiten Betriebszustand in einer Freigabeposition gezeigt. Der Fuß 706 des Operationstischs 700 ist um den Abstand F1 vom Fußboden angehoben worden. Dies ist durch die Verkürzung der Teleskopstütze 708 erreicht worden. Durch das Anheben ist das Eingriffselement 604 um die Schwenkachse 610 geschwenkt worden, sodass sich der waagerechte Abstand zwischen der Schwenkachse und dem der Operationstischsäule 702 zugewandten Ende des Eingriffselements 604 auf die Länge E2 verkürzt. Durch das dadurch bewirkte Verschwenken des ersten Eingriffselements 566 wird erreicht, dass dieses Eingriffselement 566 nicht mehr im Eingriff mit der Operationstischsäule 702 steht und die für die Verschiebung des Führungsstabs 583 in die Begrenzungsposition erforderliche Kraft nicht mehr auf den Führungsstab 583 ausübt, sodass dieser wieder zurückgestellt ist und zwischen der Drehachse 610 und dem Kontaktbereich des Eingriffselements 566 wieder die wirksame seitliche Länge D1 hat.

Durch das Verschwenken der Eingriffselemente 566, 604 um die Drehachse 610 erfolgt aufgrund der wirksamen Federkraft der in der Begrenzungseinheit 558 integrierten Rückstellfeder eine Bewegung des Kontaktelements 568 in Richtung des Pfeils P18. In Figur 25b ist die Schwenkbewegung der Eingriffselemente 566, 604 um die Schwenkachse 610 durch den Pfeil P20 angedeutet. Aufgrund dieser Schwenkbewegung erfolgt eine Schwenkbewegung des ersten Eingriffselements 566 um die Schwenkachse 581, sodass eine Bewegung in Richtung des Pfeils P18 von einer Begrenzungsposition des Kontaktelements 568 in eine in Figur 25b dargestellte Freigabeposition erfolgt.

### Bezugszeichenliste

- 100: Transportwagen
- 102: Fahrgestell
- 104, 106: Längsholm
- 108: Querholm
- 110 bis 116: Lenkrolle
- 110a, 114a: Kollisionsbereich
- 120, 122: senkrechte Stütze
- 124: Schwenkachse
- 126, 128, 140, 142: Verbindungselement
- 130: Kopplungselement
- 132, 134: Neigungseinheit
- 136: Drehgriff
- 138: Schubstange
- 141: Schwenkhebel
- 144, 146, 148: Fußbetätigungshebel
- 150: gabelförmige Öffnung
- 152, 154: Führungselement
- 156: trichterförmige Öffnung
- 158, 160: Begrenzungseinheit
- 162, 164: Abdeckblech
- 166, 167: Eingriffselement
- 168, 169: Kontaktelement
- 170: Zeiger
- 172: Markierung
- 174: Führungsrad
- 180: Hydraulikpumpe
- 181, 182: Drehachse
- 183, 184: Teleskopstab
- 185, 186: Feder
- 190: Schwenkbereich
- 192: Umriss des Operationstischfußes
- 196: seitliches Abdeckblech
- 200: vorderes Teilstück
- 202: hinteres Teilstück
- 208: Feder
- 204: Bowdenzugseele
- 206: Bowdenzughülle
- 210: Führungsblock
- 300: Operationstisch
- 302: Operationstischsäule
- 304: Patientenlagerfläche
- 306: Operationstischfuß
- 308: Teleskopstütze
- 310: Kopfmodul
- 312: Verbindungselement
- 316: zentrales Mittelteil der Patientenlagerfläche
- 500: Transportwagen
- 502: Fahrgestell
- 504, 506: Längsholm
- 508: Querholm
- 510 bis 516: Lenkrolle
- 510a, 514a: Kollisionsbereich
- 520: Schwenkrahmen
- 522: Hydraulikeinheit
- 526, 528, 540, 542: Verbindungselemente
- 530, 532: Führungseinheit
- 538, 524, 525: Fußbetätigungselemente
- 552, 554: Führungselemente
- 550: gabelförmige Aufnahmebereich
- 556: trichterförmiger Bereich
- 558, 560: Begrenzungseinheit
- 566, 567: erstes Eingriffselement
- 568, 569: Kontaktelement
- 574, 575: Führungsrolle
- 581, 582: Drehachse
- 583, 584: Führungsstab
- 604, 606: zweites Eingriffselement
- 610: Führungsblock
- 611: Schwenkachse
- 700: Operationstisch
- 702: Operationstischsäule
- 704: Patientenlagerfläche
- 706: Operationstischfuß
- 708: Teleskopstütze
- 710: Kopfmodul
- 716: Mittelteil der Patientenlagerfläche
- 722, 724: Kontaktbereich
- A1, A2, B1, B2, C1, C2: Längenkennzeichnungen
- D1, D2, E1, E2: Längenangabe
- P1 bis P22: Richtungspfeile

## Patentansprüche

1. Transportwagen zum Transport einer Patientenlagerfläche und/oder einer Operationstischsäule eines Operationstischs,
mit einem Fahrgestell (102, 502), das mit der Patientenlagerfläche (304, 704) und/oder mit der Operationstischsäule (302, 702) des Operationstischs (300, 700) verbindbar ist, und das einen ersten Längsholm (104, 504) und einen in einem Abstand zum diesem angeordneten zweiten Längsholm (106, 506) hat,
wobei der erste und der zweite Längsholm eine gabelförmige Öffnung (150, 550) bilden, und
wobei an den die gabelförmige Öffnung (150, 550) bildenden Längsholmen (104, 106, 504, 506) jeweils mindestens eine um eine Schwenkachse schwenkbare Lenkrolle (110 bis 116; 510 bis 516) angeordnet ist,
**dadurch gekennzeichnet,**
**dass** der Transportwagen (100, 500) mindestens eine Begrenzungseinheit (158, 160, 558, 560) zum Begrenzen der Schwenkbewegung mindestens einer der Lenkrollen (110, 114, 510, 514) um ihre Schwenkachse hat,
**dass** die Begrenzungseinheit (158, 160, 558, 560) in einem deaktivierten ersten Betriebszustand die Schwenkbewegung der mindestens einen Lenkrollen (110, 114, 510, 514) nicht begrenzt und dass die Begrenzungseinheit (158, 160, 558, 560) in einem aktivierten zweiten Betriebszustand die Schwenkbewegung der Lenkrolle begrenzt.

2. Transportwagen nach Anspruch 1,
**dadurch gekennzeichnet, dass**
eine erste Begrenzungseinheit (158, 558) zum Begrenzen der Schwenkbewegung der ersten Lenkrollen (110, 510) mit dem ersten Längsholm (104, 504) verbunden ist, und
dass eine zweite Begrenzungseinheit (160, 560) zum Begrenzen Schwenkbewegung der zweiten Lenkrollen (110, 510) mit dem zweiten Längsholm (106, 506) verbunden ist.

3. Transportwagen nach einem der vorhergehenden Ansprüche,
**dadurch gekennzeichnet, dass**
die Begrenzungseinheit (158, 160, 558, 560) ein Kontaktelement (168, 169, 568, 569) umfasst, das zwischen einer ersten Position im ersten Betriebszustand und einer zweiten Position im zweiten Betriebszustand bewegbar ist,
wobei, vorzugsweise, das Kontaktelement (168, 169, 568, 569) zum Begrenzen der Schwenkbewegung der Lenkrolle (110, 114, 510, 514) im zweiten Betriebszustand ein Laufrad der Lenkrolle (110, 114, 510, 514) seitlich und/oder eine seitliche Abdeckung des Laufrads der Lenkrolle (110, 114, 510, 514) kontaktiert.

4. Transportwagen nach Anspruch 3,
**dadurch gekennzeichnet, dass**
die Gerade zwischen der ersten Position und der zweiten Position parallel zur Längsachse des Längsholms (104, 106, 504, 506) verläuft, oder dass die Gerade zwischen der ersten Position und der zweiten Position windschief zur Längsachse des Längsholms (104, 106, 504, 506) verläuft, wobei die Gerade und die Längsachse in der Projektion in der Draufsicht auf den Transportwagen (100, 500) einen spitzen Winkel (α) einschließen.

5. Transportwagen nach Anspruch 3 oder 4,
**dadurch gekennzeichnet, dass**
das Kontaktelement (168, 169, 568, 569) in der zweiten Position einen größeren seitlichen Abstand zu einer senkrechten Ebene, durch die die Längsachse des Längsholms (104, 106, 504, 506) verläuft oder zu einer senkrechten Mittelebene des Transportwagens, als in der ersten Position hat, wobei die Mittelebene zwischen den Längsholmen verläuft Mittelebene.

6. Transportwagen nach einem der Ansprüche 1, 2, 4 oder 5,
**dadurch gekennzeichnet, dass**
die Begrenzungseinheit (158, 160, 558, 560) ein Kontaktelement (168, 169, 568, 569) hat, das zum Begrenzen der Schwenkbewegung der Lenkrolle (110, 114, 510, 514) im zweiten Betriebszustand ein Laufrad der Lenkrolle (110, 114, 510, 514) seitlich und/oder eine seitliche Abdeckung des Laufrads der Lenkrolle (110, 114, 510, 514) kontaktiert.

7. Transportwagen nach einem der vorhergehenden Ansprüche,
**dadurch gekennzeichnet, dass**
das Kontaktelement (168, 169, 568, 569) nach einer durch eine Bewegung des Transportwagens (100, 500) in Richtung eines freien Endes des Längsholmes (104, 106, 504, 506) entlang dessen Längsachse bewirkten Ausrichtung des Laufrads der Lenkrolle (110 bis 116; 510 bis 516) bei einer Bewegung von der ersten in die zweite Position auslenkt.

8. Transportwagen nach einem der vorhergehenden Ansprüche,
**dadurch gekennzeichnet, dass**
die Begrenzungseinheit (158, 160, 558, 560) derart ausgebildet und angeordnet ist, dass durch einen Kontakt einer zwischen den Längsholmen (104, 106, 504, 506) angeordneten Operationstischsäule (302, 702) mit der Begrenzungseinheit (158, 160, 558, 560) eine Änderung vom ersten Betriebszustand in den zweiten Betriebszustand automatisch erfolgt.

9. Transportwagen nach einem der vorhergehenden Ansprüche,
**dadurch gekennzeichnet, dass**
das Fahrgestell (102, 502) Verbindungselemente (126, 128, 140, 142, 526, 528, 540, 542) zum wahlweisen Herstellen einer Verbindung mit der Patientenlagerfläche (304, 704) oder mit der Operationstischsäule (302, 702) hat, die in einem Abstand über den Längsholmen (104, 106, 504, 506) angeordnet sind.

10. Transportwagen nach einem der vorhergehenden Ansprüche,
**dadurch gekennzeichnet, dass**
zwei weitere Lenkrollen (112, 116, 512, 516) mit dem Fahrgestell (102, 502) verbunden sind und/oder dass mindestens eine absenkbare nicht schwenkbare Führungsrolle (174, 574, 575) mit dem Fahrgestell verbunden sind.

11. Transportwagen nach einem der vorhergehenden Ansprüche,
**dadurch gekennzeichnet, dass**
mindestens zwei mit dem Fahrgestell (102, 502) verbundene Lenkrollen (110, 114, 510, 514) oder zwei mit dem Fahrgestell verbundene nicht schwenkbare Führungsrollen mit einer Bremseinheit gekoppelt sind, durch die eine Bremskraft auf die Laufräder dieser Lenkrollen (110, 114, 510, 514) ausübbar ist.

12. Transportwagen nach einem der vorhergehenden Ansprüche,
**dadurch gekennzeichnet, dass**
die Begrenzungseinheit (158, 160, 558, 560) ein erstes elastisch verformbares Element (185, 186) hat, das in dem zweiten Betriebszustand eine Kraft auf das Kontaktelement (168, 169, 568, 569) oder auf ein mit dem Kontaktelement (168, 169, 568, 569) verbundenes Führungselement (183, 184, 584, 585) ausübt, durch die das Kontaktelement in seine im ersten Betriebszustand vorgesehene Position bewegbar ist.

13. Transportwagen nach einem der vorhergehenden Ansprüche,
**dadurch gekennzeichnet, dass**
Begrenzungseinheit (158, 160, 558, 560) alternativ oder zusätzlich zum ersten elastisch verformbaren Element (185, 186) ein zweites elastisch verformbares Element (208) hat, das in dem aktivierten zweiten Betriebszustand bei einer Verformung eine Kraft auf das Kontaktelement (168, 169) ausübt, wobei das Kontaktelement (168, 169) im aktivierten zweiten Betriebszustand entgegen der durch die Verformung bewirkten Kraft aus einer Begrenzungsposition, in der die Schwenkbewegung der Lenkrolle (110, 114) begrenzt ist, in eine Freigabeposition, in der die Schwenkbewegung der Lenkrolle (110, 114) nicht begrenzt ist, mit Hilfe eines Betätigungselements (140, 141) bewegbar ist.

14. Transportwagen nach Anspruch 13,
**dadurch gekennzeichnet, dass**
das Betätigungselement (140, 141) mit einem Verbindungselement zum Verbinden des Transportwagens (100) mit der Operationstischsäule (302) derart gekoppelt ist, dass es das Kontaktelement (168, 169) bei einer Verbindung der Operationstischsäule (302) mit dem Transportwagen (100) trotz aktiviertem zweiten Betriebszustand aus der Begrenzungsposition in die Freigabeposition bewegt.

15. Anordnung mit einem Operationstisch, der eine mobile Operationstischsäule und eine mit der Operationstischsäule koppelbare Patientenliegefläche umfasst, und mit einem Transportwagen (100, 500) nach einem der vorhergehenden Ansprüche.

## Claims

1. A transport carriage for transporting a patient support surface and/or an operating table column of an operating table,
having a chassis (102, 502) that is connectable to the patient support surface (304, 704) and/or to the operating table column (302, 702) of the operating table (300, 700), and having a first longitudinal beam (104, 504) and a second longitudinal beam (106, 506) situated at a distance therefrom,
wherein the first and the second longitudinal beams form a fork-shaped opening (150, 550), and
wherein at least one swivel caster (110 through 116; 510 through 516) that is pivotable about a swivel axis is situated in each case on the longitudinal beams (104, 106, 504, 506) that form the fork-shaped opening (150, 550),
**characterized in that**
the transport carriage (100, 500) has at least one limiting unit (158, 160, 558, 560) for limiting the swivel motion of at least one of the swivel casters (110, 114, 510, 514) about its swivel axis, and the limiting unit (158, 160, 558, 560) in a deactivated first operating state does not limit the swivel motion of the at least one swivel caster (110, 114, 510, 514), and the limiting unit (158, 160, 558, 560) in an activated second operating state limits the swivel motion of the swivel caster.

2. The transport carriage according to Claim 1,
**characterized in that**
a first limiting unit (158, 558) for limiting the swivel motion of the first swivel casters (110, 510) is connected to the first longitudinal beam (104, 504), and
a second limiting unit (160, 560) for limiting swivel motion of the second swivel casters (110, 510) is connected to the second longitudinal beam (106, 506).

3. The transport carriage according to one of the preceding claims,
**characterized in that**
the limiting unit (158, 160, 558, 560) includes a contact element (168, 169, 568, 569) that is movable between a first position in the first operating state and a second position in the second operating state,
wherein the contact element (168, 169, 568, 569) for limiting the swivel motion of the swivel caster (110, 114, 510, 514) in the second operating state preferably laterally contacts a running wheel of the swivel caster (110, 114, 510, 514) and/or a lateral cover of the running wheel of the swivel caster (110, 114, 510, 514).

4. The transport carriage according to Claim 3,
**characterized in that**
the straight line between the first position and the second position extends in parallel to the longitudinal axis of the longitudinal beam (104, 106, 504, 506), or the straight line between the first position and the second position extends at an angle with respect to the longitudinal axis of the longitudinal beam (104, 106, 504, 506), wherein the straight line and the longitudinal axis in the projection in the plan view of the transport carriage (100, 500) enclose an acute angle (α).

5. The transport carriage according to Claim 3 or 4,
**characterized in that**
the contact element (168, 169, 568, 569) in the second position has a greater lateral distance from a perpendicular plane through which the longitudinal axis of the longitudinal beam (104, 106, 504, 506) extends, or from a perpendicular center plane of the transport carriage, than in the first position, wherein the center plane extends between the longitudinal beams.

6. The transport carriage according to one of Claims 1, 2, 4, or 5, **characterized in that**
the limiting unit (158, 160, 558, 560) has a contact element (168, 169, 568, 569), which for limiting the swivel motion of the swivel caster (110, 114, 510, 514) in the second operating state laterally contacts a running wheel of the swivel caster (110, 114, 510, 514) and/or a lateral cover of the running wheel of the swivel caster (110, 114, 510, 514).

7. The transport carriage according to one of the preceding claims,
**characterized in that**
the contact element (168, 169, 568, 569), after an orientation of the running wheel of the swivel caster (110 through 116; 510 through 516) brought about by a movement of the transport carriage (100, 500) in the direction of a free end of the longitudinal beam (104, 106, 504, 506) along the longitudinal axis thereof, deflects upon a movement from the first position to the second position.

8. The transport carriage according to one of the preceding claims,
**characterized in that**
the limiting unit (158, 160, 558, 560) is designed and arranged in such a way that a change from the first operating state to the second operating state takes place automatically by contact of an operating table column (302, 702), situated between the longitudinal beams (104, 106, 504, 506), with the limiting unit (158, 160, 558, 560).

9. The transport carriage according to one of the preceding claims,
**characterized in that**
the chassis (102, 502) has connecting elements (126, 128, 140, 142, 526, 528, 540, 542) for selectively establishing a connection with the patient support surface (304, 704) or with the operating table column (302, 702), the connecting elements being situated at a distance above the longitudinal beams (104, 106, 504, 506).

10. The transport carriage according to one of the preceding claims,
**characterized in that**
two further swivel casters (112, 116, 512, 516) are connected to the chassis (102, 502), and/or at least one lowerable, nonpivotable guide roller (174, 574, 575) is connected to the chassis.

11. The transport carriage according to one of the preceding claims,
**characterized in that**
at least two swivel casters (110, 114, 510, 514) connected to the chassis (102, 502) or two nonpivotable guide rollers connected to the chassis are coupled to a braking unit, via which a braking force is exertable on the running wheels of these swivel casters (110, 114, 510, 514).

12. The transport carriage according to one of the preceding claims,
**characterized in that**
the limiting unit (158, 160, 558, 560) has a first elastically deformable element (185, 186), which in the second operating state exerts a force on the contact element (168, 169, 568, 569) or on a guide element (183, 184, 584, 585) connected to the contact element (168, 169, 568, 569), via which the contact element is movable into its position provided in the first operating state.

13. The transport carriage according to one of the preceding claims,
**characterized in that**
the limiting unit (158, 160, 558, 560), as an alternative or in addition to the first elastically deformable element (185, 186), has a second elastically deformable element (208) which in the activated second operating state during a deformation exerts a force on the contact element (168, 169), wherein the contact element (168, 169) in the activated second operating state is movable by means of an actuating element (140, 141), against the force brought about by the deformation, from a limiting position in which the swivel motion of the swivel caster (110, 114) is limited, into a release position in which the swivel motion of the swivel caster (110, 114) is not limited.

14. The transport carriage according to Claim 13,
**characterized in that**
the actuating element (140, 141) is coupled to a connecting element for connecting the transport carriage (100) to the operating table column (302) in such a way that the actuating element moves the contact element (168, 169) from the limiting position into the release position when the operating table column (302) is connected to the transport carriage (100), despite the second operating state being activated.

15. An arrangement having an operating table that includes a mobile operating table column and a patient support surface that is coupleable to the operating table column, and having a transport carriage (100, 500) according to one of the preceding claims.

## Revendications

1. Chariot de transport pour transporter une surface de support de patient et/ou une colonne de table d'opération d'une table d'opération,
avec un châssis (102, 502) pouvant être relié à la surface de support de patient (304, 704) et/ou à la colonne de table d'opération (302, 702) de la table d'opération (300, 700) et présentant un premier longeron (104, 504) et un deuxième longeron (106, 506) disposé à distance de celui-ci,
dans lequel le premier et le deuxième longerons forment une ouverture en forme de fourche (150, 550), et
dans lequel sur les longerons (104, 106, 504, 506) formant l'ouverture en forme de fourche (150, 550) est disposée respectivement au moins une roulette (110 à 116 ; 510 à 516) pivotant autour d'un axe de pivotement,
**caractérisé en ce que** le chariot de transport (100, 500) comporte au moins une unité de limitation (158, 160, 558, 560) pour limiter le mouvement pivotant d'au moins l'une des roulettes (110, 114, 510, 514) autour de son axe de pivotement, **en ce que** dans un premier mode de fonctionnement désactivé, l'unité de limitation (158, 160, 558, 560) ne limite pas le mouvement pivotant de ladite au moins une roulette (110, 114, 510, 514), et **en ce que** dans un deuxième mode de fonctionnement activé, l'unité de limitation (158, 160, 558, 560) limite le mouvement pivotant de la roulette.

2. Chariot de transport selon la revendication 1, **caractérisé en ce qu'**une première unité de limitation (158, 558) pour limiter le mouvement pivotant des premières roulettes (110, 510) est reliée au premier longeron (104, 504), et **en ce qu'**une deuxième unité de limitation (160, 560) pour limiter le mouvement pivotant des deuxièmes roulettes (110, 510) est reliée au deuxième longeron (106, 506).

3. Chariot de transport selon l'une quelconque des revendications précédentes, **caractérisé en ce que** l'unité de limitation (158, 160, 558, 560) comprend un élément de contact (168, 169, 568, 569) mobile entre une première position dans le premier mode de fonctionnement et une deuxième position dans le deuxième mode de fonctionnement,
dans lequel, de préférence, pour limiter le mouvement pivotant de la roulette (110, 114, 510, 514) dans le deuxième mode de fonctionnement, l'élément de contact (168, 169, 568, 569) entre en contact latéral avec une roue de roulement de la roulette (110, 114, 510, 514) et/ou en contact avec un chapeau latéral de la roue de roulement de la roulette (110, 114, 510, 514).

4. Chariot de transport selon la revendication 3, **caractérisé en ce que** la droite entre la première position et la deuxième position s'étend en parallèle à l'axe longitudinal du longeron (104, 106, 504, 506), ou **en ce que** la droite entre la première position et la deuxième position s'étend de manière inclinée, la droite et l'axe longitudinal formant un angle aigu (α) dans la projection en vue de dessus sur le chariot de transport (100, 500).

5. Chariot de transport selon la revendication 3 ou 4, **caractérisé en ce que** l'élément de contact (168, 169, 568, 569) comporte dans la deuxième position par rapport à un plan vertical par lequel s'étend l'axe longitudinal du longeron (104, 106, 504, 506) ou par rapport à un plan médian vertical du chariot de transport une distance latérale plus grande que dans la première position, le plan médian s'étendant entre les longerons.

6. Chariot de transport selon l'une quelconque des revendications 1, 2, 4 ou 5, **caractérisé en ce que** l'unité de limitation (158, 160, 558, 560) comporte un élément de contact (168, 169, 568, 569) qui, pour limiter le mouvement pivotant de la roulette (110, 114, 510, 514) dans le deuxième mode de fonctionnement, entre en contact latéral avec une roue de roulement de la roulette (110, 114, 510, 514) latéralement et/ou en contact un chapeau latéral de la roue de roulement de la roulette (110, 114, 510, 514).

7. Chariot de transport selon l'une quelconque des revendications précédentes, **caractérisé en ce que** l'élément de contact (168, 169, 568, 569), après un alignement de la roue de roulement de la roulette (110 à 116; 510 à 516) provoqué par un mouvement du chariot de transport (100, 500) en direction d'une extrémité libre du longeron (104, 106, 504, 506) suivant l'axe longitudinal de celui-ci, s'écarte de la première à la deuxième position en cas de mouvement.

8. Chariot de transport selon l'une quelconque des revendications précédentes, **caractérisé en ce que** l'unité de limitation (158, 160, 558, 560) est réalisée et disposée de telle sorte qu'un contact d'une colonne de table d'opération (302, 702) disposée entre les longerons (104, 106, 504, 506) avec l'unité de limitation (158, 160, 558, 560) provoque automatiquement un changement du premier mode de fonctionnement au deuxième mode de fonctionnement.

9. Chariot de transport selon l'une quelconque des revendications précédentes, **caractérisé en ce que** le châssis (102, 502) comporte des éléments de connexion (126, 128, 140, 142, 526, 528, 540, 542) pour établir sélectivement une connexion avec la surface de support de patient (304, 704) ou avec la colonne de table d'opération (302, 702) qui sont disposées à distance au-dessus des longerons (104, 106, 504, 506).

10. Chariot de transport selon l'une quelconque des revendications précédentes, **caractérisé en ce que** deux roulettes supplémentaires (112, 116, 512, 516) sont reliées au châssis (102, 502) et/ou **en ce qu'**au moins une roulette de guidage non pivotante et abaissable (174, 574, 575) est reliée au châssis.

11. Chariot de transport selon l'une quelconque des revendications précédentes, **caractérisé en ce qu'**au moins deux roulettes (110, 114, 510, 514) reliées au châssis (102, 502) ou deux roulettes de guidage pivotantes non reliées au châssis sont couplées à une unité de freinage pouvant exercer une force de freinage sur les roues de roulement de ces roulettes (110, 114, 510, 514).

12. Chariot de transport selon l'une quelconque des revendications précédentes, **caractérisé en ce que** l'unité de limitation (158, 160, 558, 560) comporte un premier élément à déformation élastique (185, 186) exerçant dans le deuxième mode de fonctionnement une force sur l'élément de contact (168, 169, 568, 569) ou sur un élément de guidage (183, 184, 584, 585) relié à l'élément de contact (168, 169, 568, 569) par laquelle l'élément de contact peut être déplacé dans la position prévue pour celui-ci dans le premier mode de fonctionnement.

13. Chariot de transport selon l'une quelconque des revendications précédentes, **caractérisé en ce que** l'unité de limitation (158, 160, 558, 560) comporte en variante ou en plus du premier élément à déformation élastique (185, 186) un deuxième élément à déformation élastique (208) qui exerce en cas de déformation dans le deuxième mode de fonctionnement activé une force sur l'élément de contact (168, 169), dans lequel, dans le deuxième mode de fonctionnement activé, l'élément de contact (168, 169) peut être déplacé à l'aide d'un élément d'actionnement (140, 141) contre la force provoquée par la déformation d'une position de limitation dans laquelle le mouvement pivotant de la roulette (110, 114) est limité vers une position de déblocage dans laquelle le mouvement pivotant de la roulette (110, 114) n'est pas limité.

14. Chariot de transport selon la revendication 13, **caractérisé en ce que** l'élément d'actionnement (140, 141) est couplé avec un élément de connexion pour relier le chariot de transport (100) à la colonne de table d'opération (302) de telle sorte qu'il déplace l'élément de contact (168, 169) en cas de connexion de la colonne de table d'opération (302) avec le chariot de transport (100) malgré le deuxième mode de fonctionnement activé de la position de limitation à la position de déblocage.

15. Ensemble avec une table d'opération comprenant une colonne de table d'opération mobile et une surface de support de patient pouvant être couplée à la colonne de table d'opération, et avec un chariot de transport (100, 500) selon l'une quelconque des revendications précédentes.
